(19) Europäisches Patentamt
European Patent Office
Office européen des brevets

(11) **EP 3 901 486 A1**

(12) **EUROPEAN PATENT APPLICATION**
published in accordance with Art. 153(4) EPC

(43) Date of publication:
**27.10.2021 Bulletin 2021/43**

(51) Int Cl.:
*F16F 7/12* (2006.01)     *B29C 70/42* (2006.01)
*F16F 7/00* (2006.01)

(21) Application number: **18943781.7**

(22) Date of filing: **20.12.2018**

(86) International application number:
**PCT/JP2018/047112**

(87) International publication number:
**WO 2020/129227 (25.06.2020 Gazette 2020/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Teijin Limited
Osaka 530-0005 (JP)**

(72) Inventors:
• **YOKOMIZO Hodaka
Osaka-shi, Osaka 530-0005 (JP)**
• **OBATA Akihiko
Osaka-shi, Osaka 530-0005 (JP)**

(74) Representative: **Carpmaels & Ransford LLP
One Southampton Row
London WC1B 5HA (GB)**

(54) **METHOD FOR MANUFACTURING IMPACT-ABSORBING MEMBER**

(57)     The present invention provides an impact-absorbing member having a hollow-structured impact-absorbing section comprising an outer cylinder section and a hollow section, wherein the outer cylinder section includes a thermoplastic resin and carbon fibers having a weight-average fiber length of 1 mm to 100 mm, and throughout the entire periphery of the outer cylinder part, there is an annular region where the carbon fibers are dispersed in an in-plane direction and there is no bonding portion such as a welded surface; therefore, there is no breaking starting point when impact is borne and the impact absorption ability is stable.

FIG.1A

FIG.1B

## FIG.1C

## FIG.1D

**Description**

TECHNICAL FIELD

The present invention relates to an impact absorbing member including a hollow-structural impact absorbing portion formed of an outer tubular portion and a hollow portion. More particularly, the present invention relates to an impact absorbing member which includes an outer tubular portion containing carbon fibers having a specific weight average fiber length and a thermoplastic resin, and an annulus region in which the carbon fibers are dispersed in an in-plane direction over the entire circumference of the outer tubular portion.

BACKGROUND ART

In order to prevent the impact of a collision from being directly transmitted to personnel in the front side or the rear side of the vehicle, for example, impact absorbing members such as crash boxes, front side members, and rear side members are often provided. In the related art, the impact absorbing member is generally made of a metal material. However, in recent years, it has been desired to reduce the weight of the vehicle for the purpose of improving fuel efficiency, and research on constructing an impact absorbing member with a fiber-reinforced composite material has been actively conducted.

In particular, so-called fiber-reinforced resin molded products containing carbon fibers and thermoplastic resins are attracting attention. Because of containing carbon fibers in the thermoplastic resin, these fiber-reinforced resin molded products are excellent in mechanical properties and are attracting attention as structural members of automobiles and the like. These fiber-reinforced resin composite materials can be molded into a desired shape by press molding such as cold pressing.

For example, Patent Literature 1 describes a hollow-structural impact absorbing member formed of an outer tubular portion containing carbon fibers and a thermoplastic resin, and a hollow portion. Patent Literature 2 describes a joint body in which two hat-shaped molded products are combined with a flange portion. Patent Literature 3 describes a press molded product obtained by winding a molding material around a core mold.

CITATION LIST

PATENT LITERATURE

Patent Literature 1: JP-A-2012-87849
Patent Literature 2: JP-A-2013-933
Patent Literature 3: JP-A-2006-205419

SUMMARY OF INVENTION

TECHNICAL PROBLEM

However, Patent Literature 1 does not describe a method for molding the impact absorbing member, and the carbon fiber morphology of the outer tubular portion is unknown. In the impact absorbing member in the related art, for example, the hat-shaped molded product including a flange portion described in Patent Literature 2 is produced, then the flange portion is cut off after welding, and an impact absorbing member is produced to obtain an outer tubular portion. In this case, when an impact is applied, the welded portion tends to be the starting point of a fracture. In particular, when a closed cross-sectional shape of the outer tubular portion is circular, the outer tubular portion buckles outward or inward at the time of impact input and collapses to absorb the impact of energy, and the welded surface of the outer tubular portion produced by welding is peeled off, making the impact absorption difficult to stabilize.

In addition, in the invention described in Patent Literature 3, the amount of the molding material wound around the core mold is small, and the end portion is fluidly molded. In this method, the fiber orientation at the end portion and the central portion is not uniform, and the impact absorbing capacity is reduced.

Therefore, an object of the present invention is to provide an impact absorbing member having high impact absorbing performance that does not have a joint surface such as a welded surface, and a production method therefor.

SOLUTION TO PROBLEM

In order to solve the above problems, the present invention provides the following solutions.
[1] A method for producing an impact absorbing member, including: preheating a plate-shaped molding material containing carbon fibers having a weight average fiber length of 1 mm or more and 100 mm or less and a thermoplastic resin; and cold press molding the preheated molding material, in which

a magnitude of spring back is more than 1.0 and less than 14.0, the magnitude of spring back being a ratio of a thickness of the molding material after the preheating to a thickness of the molding material before the preheating,
the impact absorbing member includes an impact absorbing portion having a hollow structure formed of an outer tubular portion and a hollow portion, and the impact absorbing member satisfies $0.7 < E1/E2 < 1.3$, wherein

E1 represents a tensile elastic modulus in a direction perpendicular to an impact absorbing direction at one end portion of the outer tubular portion, and
E2 represents a tensile elastic modulus in the direction perpendicular to the impact absorbing direction at a central portion of the outer tubular portion, and
the outer tubular portion has an annulus region in which the carbon fibers are dispersed in an in-plane direction over the entire circumference of the outer tubular portion.

[2] The method for producing an impact absorbing member according to [1], in which the thickness of the outer tubular portion is uneven that the thickness increases from the one end portion to the other end portion of the outer tubular portion.
[3] The method for producing an impact absorbing member according to [1] or [2], in which a relationship between a thickness T1 at the one end portion of the outer tubular portion and a thickness T2 at the other end portion of the outer tubular portion satisfies $1.0 < T2/T1 < 3.0$.
[4] The method for producing an impact absorbing member according to any one of [1] to [3], in which

a mounting portion is provided on one of end portions of the outer tubular portion by integral molding,
the mounting portion contains carbon fibers having a weight average fiber length of 1 mm or more and 100 mm or less and a thermoplastic resin, and
the carbon fibers are present across the outer tubular portion toward the mounting portion.

[5] The method for producing an impact absorbing member according to any one of [1] to [4], in which the carbon fibers are dispersed in the in-plane direction over the entire region of the outer tubular portion.
[6] The method for producing an impact absorbing member according to any one of [1] to [5], satisfying $1 < R_A/R_B < 2$, in which

$R_A$ represents a diameter of a smallest circle among circles including the entire shape of an outer line of a cross section of the outer tubular portion cut in the direction perpendicular to the impact absorbing direction, and
$R_B$ represents a diameter of a largest circle among circles present inside the shape of the outer line without protruding from the outer line.

[7] The method for producing an impact absorbing member according to [6], in which

a shape of the cross section of the outer tubular portion cut in the direction perpendicular to the impact absorbing direction is a polygon, and
all apex angles of the polygon are 90 degrees or more.

[8] The method for producing an impact absorbing member according to any one of [1] to [7], including:

winding the molding material softened by heating around a molding surface of a mold for one or more turns, an outer shape of the molding surface being a cylindrical shape, an elliptical cylindrical shape, a polygonal cylindrical shape, a truncated conical shape, an elliptical pyramid shape, or a polygonal pyramid shape; and
press-molding the molding material.

[9] The method for producing an impact absorbing member according to [8], in which the mold is a core mold, and the method includes:

arranging the core mold around which the molding material is wound one or more turns between a molding upper mold and a molding lower mold; and
performing the cold press molding.

[10] The method for producing an impact absorbing member according to [9], in which the cold pressing is performed with maintaining a temperature of the core mold being higher than a temperature of the molding upper mold or the molding lower mold, and, being less than a temperature being 20°C lower than a melting point of the thermoplastic resin when the thermoplastic resin is a crystalline resin, or less than a temperature being 20°C lower than a glass transition temperature of the thermoplastic resin when the thermoplastic resin is an amorphous resin.
[11] The method for producing an impact absorbing member according to [9] or [10], further comprising:
preliminary shaping the molding material with providing a space between the molding material and the core mold when winding the molding material around the core mold.
[12] The method for producing an impact absorbing member according to [11], in which a relationship between an area S1 of a region of the preliminarily shaped molding material facing the core mold and a molding area S2 of the core mold satisfies 1.05 < S1/S2 < 1.3.
[13] The method for producing an impact absorbing member according to any one of [9] to [12], in which a minimum length of an overlapped portion of the wound molding material in a winding direction is equal to or more than 5 times a thickness of the molding material.

ADVANTAGEOUS EFFECTS OF INVENTION

According to the impact absorbing member and the production method therefor in the present invention, no joint portions such as a welded surface is present in the annulus region, so that there is no starting point of fracture when an impact is received, and the impact absorbing capacity is stabilized. In addition, in the impact absorbing member obtained by the present invention, the fiber orientation of the end portion and the central portion of the outer tubular portion in an axial direction is uniform, so that the impact absorbing capacity is more stabilized.

BRIEF DESCRIPTION OF DRAWINGS

Fig. 1A is a schematic diagram of an impact absorbing member having an uneven thickness that the thickness increases toward a hollow portion side from one end portion to the other end portion of an outer tubular portion.
Fig. 1B is a schematic diagram of an impact absorbing member having an uneven thickness that the thickness increases toward a hollow portion side and an outer side from one end portion to the other end portion of an outer tubular portion.
Fig. 1C is a schematic diagram of an impact absorbing member having an uneven thickness that the thickness increases toward an outer side from one end portion to the other end portion of an outer tubular portion.
Fig. 1D is a schematic diagram of an impact absorbing member having a cylindrical shape.
Fig. 2A is a schematic diagram of an impact absorbing member having an uneven thickness that the thickness increases from one end portion to the other end portion of an outer tubular portion.
Fig. 2B is a schematic diagram of a sectional view of the impact absorbing member.
Fig. 3A is a schematic diagram of an impact absorbing member including a mounting portion and having an uneven thickness that the thickness increases from one end portion to the other end portion of an outer tubular portion.
Fig. 3B is a schematic diagram of a sectional view of the impact absorbing member including the mounting portion.
Fig. 4A is a schematic diagram of an impact absorbing member having a cylindrical shape.
Fig. 4B is a schematic diagram of a sectional view of an impact absorbing member including a cylindrical impact absorbing portion and a mounting portion.
Fig. 5A is a schematic diagram of a molding lower mold (schematic diagram seen from a horizontal direction).
Fig. 5B is a schematic diagram of the molding lower mold (schematic diagram seen from an upper direction).
Fig. 5C is a schematic diagram of a method for producing an impact absorbing member, including winding a molding material around a mold for molding, and is a schematic diagram seen from the horizontal direction when the molding material is arranged in the mold.
Fig. 5D is a schematic diagram of the method for producing an impact absorbing member, including winding a molding material around a mold for molding, and is a schematic diagram seen from above when the molding material is arranged in the mold.

Fig. 5E is a schematic diagram showing the molding material before winding.

Fig. 6A is a schematic diagram of a method for producing an impact absorbing member, including stacking a molding material in a cross shape and arranging a mold for molding, and is a schematic diagram seen from the horizontal direction when the molding material is arranged in the mold.

Fig. 6B is a schematic diagram of the method for producing an impact absorbing member, including stacking a molding material in a cross shape and arranging a mold for molding, and is a schematic diagram seen from above when the molding material is arranged in the mold.

Fig. 7 is a schematic diagram of a method for producing an impact absorbing member, including stacking 17 pieces of a molding material and arranging a mold for molding, and is a schematic diagram seen from the horizontal direction when the molding material is arranged in the mold.

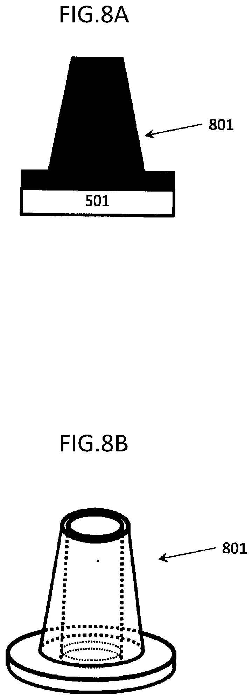

Fig. 8A is a schematic diagram showing an impact absorbing member after molding (a state of being placed on a mold).

Fig. 8B is a schematic diagram showing the molded product after molding (a state after being taken out of the mold).

Fig. 9A is a schematic diagram of a mandrel.

Fig. 9B is a schematic diagram (front view) of the mandrel and a mold (closed state).

Fig. 9C is a schematic diagram (side view) of the mandrel and the mold (closed state).

Fig. 10A is a schematic diagram showing the mandrel and a molding material.

Fig. 10B is a schematic diagram showing winding of the molding material around the mandrel. Fig. 10C shows the produced impact absorbing member having a cylindrical shape.

Fig. 11A is a schematic diagram showing a mandrel wound with a molding material for producing an impact absorbing member having a mounting portion, in which winding is performed for 4 turns, and for the last 2 turns, winding is performed only on a portion to be a mounting portion.

Fig. 11B is a schematic diagram of a molding material for providing a portion for performing winding for 2 more turns in addition to the rectangular molding material, in order to make the mounting portion.

Fig. 12A is a schematic diagram showing an annulus region, when using an outer tubular portion, having an uneven thickness that the thickness increases from one end portion to the other end portion of an outer tubular portion.

Fig. 12B is a schematic diagram showing an annulus region, when the outer tubular portion has a cylindrical shape.

Fig. 13A shows a schematic diagram of an impact absorbing member obtained by producing two molded products having a hat-shaped cross section, welding the molded products, and then removing a flange portion, viewed from a cross section in a direction orthogonal to an impact absorbing direction.

Fig. 13B shows a schematic diagram of an impact absorbing member obtained by producing two molded products having a hat-shaped cross section, welding the molded products, and then removing a flange portion, viewed from a cross section in a direction orthogonal to an impact absorbing direction.

Fig. 13C shows a schematic diagram of an impact absorbing member obtained by producing two molded products having a hat-shaped cross section, welding the molded products, and then removing a flange portion, viewed from a cross section in a direction orthogonal to an impact absorbing direction.

Fig. 13D shows a schematic diagram of an impact absorbing member obtained by producing two molded products having a hat-shaped cross section, welding the molded products, and then removing a flange portion, viewed from a cross section in a direction orthogonal to an impact absorbing direction.

Fig. 14A is a schematic diagram showing the orientation of carbon fibers around a flange portion in a hat-shaped molded product including the flange portion.

Fig. 14B is a schematic diagram showing the orientation of carbon fibers in a welded portion when the hat-shaped molded product including the flange portion is produced, then the flange portion is cut off after welding, and an impact absorbing member is produced to obtain an outer tubular portion.

Fig. 15 is a schematic diagram showing a line for cutting an impact absorbing member in order to examine the in-plane orientation of carbon fibers.

Fig. 16 is a schematic diagram of a sectional view of an impact absorbing member, which is an impact absorbing member having an uneven thickness that the thickness increases from one end portion to the other end portion of an outer tubular portion and that an outer tubular region having an uniform thickness is changed stepwise (discontinuously).

Fig. 17A is a schematic diagram of an impact absorbing member provided with ribs.

Fig. 17B is a schematic diagram of an impact absorbing member provided with protrusions.

Fig. 18A is a schematic diagram showing a mandrel and a molding material.

Fig. 18B is a schematic diagram showing winding of the molding material around the mandrel.

Fig. 19 is a schematic diagram of an impact absorbing member.

Fig. 20 is a schematic diagram of a sectional view of an impact absorbing member, which is an impact absorbing member having an uneven thickness that the thickness increases from one end portion to the other end portion of an outer tubular portion and that an outer tubular region having an uniform thickness is increased stepwise (discontinuously).

Fig. 21 is a schematic diagram of a sectional view of an impact absorbing member, which is an impact absorbing member having an uneven thickness that the thickness increases from one end portion to the other end portion of an outer tubular portion and that an outer tubular region having an uniform thickness is increased stepwise (discontinuously).

Fig. 22 is a schematic diagram of a sectional view of an impact absorbing member, which is an impact absorbing member having an uneven thickness that the thickness increases from one end portion to the other end portion of an outer tubular portion and that an outer tubular region having an uniform thickness is increased stepwise (discontinuously).

Fig. 23 is a schematic diagram showing that a molding material wound around a mandrel (core mold) does not enter a mold and cannot be molded since a magnitude of spring back of the molding material is 14.0 or more.

Fig. 24 is a schematic diagram showing a state where a molding material is wound around a core mold.

Fig. 25 is a schematic diagram showing a state where a molding material is wound around a core mold.

Fig. 26A is a schematic diagram showing a smallest circle among circles including the entire shape of an outer line of a cross section of an outer tubular portion cut in a direction perpendicular to an impact absorbing direction.

Fig. 26B is a schematic diagram showing a largest circle that can present inside the shape of the outer line without protruding from the outer line.

Figs. 27A and 27B show a schematic diagram showing a test piece for a tensile test.

Fig. 28 is a schematic diagram explaining an impact absorbing direction.

DESCRIPTION OF EMBODIMENTS

[Carbon Fibers]

Examples of carbon fibers for use in the present invention include generally polyacrylonitrile (PAN)-based carbon fibers, petroleum/coal pitch-based carbon fibers, rayon-based carbon fibers, cellulose-based carbon fibers, lignin-based carbon fibers, phenol-based carbon fibers, and vapor-phase growth-based carbon fibers. In the present invention, any of these carbon fibers can be preferably used.

Among these, in the present invention, it is preferable to use polyacrylonitrile (PAN)-based carbon fibers because of excellent tensile strength thereof. When PAN-based carbon fibers are used as the carbon fibers, the tensile elastic modulus thereof is preferably in the range of 100 GPa to 600 GPa, more preferably in the range of 200 GPa to 500 GPa, and still more preferably in the range of 230 GPa to 450 GPa. In addition, the tensile strength is preferably in the range of 2000 MPa to 10000 MPa, and more preferably in the range of 3000 MPa to 8000 MPa.

The carbon fibers for use in the present invention may have a sizing agent attached to the surface thereof. When the carbon fibers are attached with a sizing agent, the type of the sizing agent can be appropriately selected depending on the types of the carbon fibers and a matrix resin, and is not particularly limited.

(Fiber Length)

The carbon fibers for use in the present invention are discontinuous carbon fibers having a weight average fiber length Lw of 1 mm to 100 mm. The weight average fiber length of the discontinuous carbon fibers is more preferably 3 mm to 80 mm, and still more preferably 5 mm to 60 mm. When the weight average fiber length is 100 mm or less, the fluidity of the molding material is not decreased, and a desired shape of a molded product can be obtained during press molding. On the other hand, when the weight average fiber length is 1 mm or more, the mechanical strength of the molded product is not decreased, which is preferred.

In the present invention, carbon fibers having different fiber lengths may be used in combination. In other words, the carbon fibers for use in the present invention may have a single peak or a plurality of peaks in the weight average fiber length.

Since the carbon fibers contained in injection molding and extrusion molding are to be subjected to a kneading step, the weight average fiber length of the carbon fibers is generally 1 mm or less.

The average fiber length of the carbon fibers can be calculated based on the following equation (a), for example, by measuring the fiber lengths of 100 fibers randomly selected from a molded product to a unit of 1 mm using a caliper or the like.

When the fiber length of each carbon fiber is set to Li and the number of the measured fibers is set to j, the number average fiber length (Ln) and the weight average fiber length (Lw) are obtained according to the following equations (a) and (b).

$$Ln = \Sigma Li/j \dots \text{Equation (a)}$$

$$Lw = (\Sigma Li^2)/(\Sigma Li) \dots \text{Equation (b)}$$

When the fiber length is constant, the number average fiber length and the weight average fiber length have the same value.

Extraction of carbon fibers from the molded product can be performed, for example, by subjecting the impact absorbing member (molded product) to a heat treatment at about 500°C for about 1 hour and removing the resin in the furnace.

(Fiber Diameter)

The fiber diameter of each of the carbon fibers for use in the present invention may be appropriately determined depending on the type of the carbon fibers, and is not particularly limited. In general, the average fiber diameter is preferably in the range of 3 $\mu$m to 50 $\mu$m, more preferably in the range of 4 $\mu$m to 12 $\mu$m, and still more preferably in the range of 5 $\mu$m to 8 $\mu$m. Here, the average fiber diameter refers to the diameter of a single fiber of the carbon fibers. Therefore, when the carbon fibers are in the form of a fiber bundle, the average fiber diameter refers to the diameter of the carbon fiber (single fiber) constituting the fiber bundle, not the diameter of the fiber bundle. The average fiber diameter of the carbon fibers can be measured by, for example, the method described in JIS R-7607:2000.

(Volume Ratio of Carbon Fibers)

In the present invention, the volume ratio (hereinafter, may be simply referred to as "Vf") of the carbon fibers contained in the impact absorbing member defined by the following equation (c) is not particularly limited. The volume ratio (Vf) of the carbon fibers is preferably 10 vol% to 60 vol%, more preferably 20 vol% to 50 vol%, and still more preferably 25 vol% to 45 vol%.

$$\text{Volume ratio (Vf) of carbon fibers} = 100 \times \text{volume of carbon fibers} / (\text{volume of carbon fibers} + \text{volume of thermoplastic resin}) \dots \text{Equation (c)}$$

When the volume ratio (Vf) of the carbon fibers in the impact absorbing member is 10 vol% or more, it is easy to obtain the desired mechanical properties. On the other hand, when the volume ratio (Vf) of the carbon fibers in the impact absorbing member is more than 60 vol%, good fluidity is obtained when the impact absorbing member is used for press molding and the like, and it is easy to obtain a desired shape of the impact absorbing member.

(Fiber Morphology)

The carbon fibers for use in the present invention may be in the form of a single fiber composed of a single fiber or in the form of a fiber bundle composed of a plurality of single fibers regardless of the type thereof.

The carbon fibers for use in the present invention may be in the form of only single fiber, the form of only fiber bundle, or a mixture of both. In the case of carbon fibers in the form of fiber bundle, the number of single fibers constituting each fiber bundle may be substantially uniform or different in each fiber bundle.

When the carbon fibers for use in the present invention are in the form of fiber bundle, the number of single fibers constituting each fiber bundle is not particularly limited, and is usually in the range of 1,000 to 100,000.

In general, the carbon fibers are in the form of fiber bundle in which several thousands to several tens of thousands of filaments are aggregated. In the case where the above carbon fibers are used as the carbon fibers, when the carbon fibers are used as they are, an entangled portion of the fiber bundles becomes locally thick, and it may be difficult to obtain a thin impact absorbing member. Therefore, when the above carbon fibers are used, the fiber bundle is usually widened or opened.

[Thermoplastic Resin]

The thermoplastic resin for use in the present invention is not particularly limited, and a thermoplastic resin having a desired softening point or melting point can be appropriately selected and used.

As the thermoplastic resin, a thermoplastic resin having a softening point in the range of 180°C to 350°C is generally used, but the thermoplastic resin is not limited thereto.

Examples of the thermoplastic resin include: polyolefin-based resins such as a polyethylene resin, a polypropylene resin, a polybutadiene resin, a polymethylpentene resin, a vinyl chloride resin, a vinylidene chloride resin, a vinyl acetate resin, and a polyvinyl alcohol resin; styrene-based resins such as s polystyrene resin, a acrylonitrile-styrene resin (AS resin), and a acrylonitrile-butadiene-styrene resin (ABS resin); polyamide-based resins such as a polyamide 6 resin (nylon 6), a polyamide 11 resin (nylon 11), a polyamide 12 resin (nylon 12), a polyamide 46 resin (nylon 46), a polyamide 66 resin (nylon 66), and a polyamide 610 resin (nylon 610); polyester resins such as a polyethylene terephthalate resin, a polyethylene naphthalate resin, a polybutylene terephthalate resin, a polytrimethylene terephthalate resin, and a liquid crystal polyester; (meta)acrylic resins such as a polyacetal resin, a polycarbonate resin, a polyoxymethylene resin, and polymethylmethacrylate; a polyarylate resin; a polyphenylene ether resin; a modified polyphenylene ether resin; a thermoplastic polyimide resin; a polyamideimide resin; a polyetherimide resin; a polyethernitrile resin; a phenoxy resin; a polyphenylene sulfide resin; a polysulfone resin; a modified polysulfone resin; a polyethersulfone resin; a polyketone resin; a polyetherketone resin; a polyetheretherketone resin; a polyetherketone ketone resin; a urethane resin; fluorine-based resins such as polytetrafluoroethylene; and a polybenzimidazole resin.

The thermoplastic resin for use in the present invention may be used alone or in combination of two or more types thereof. Example of a mode in which two or more types of thermoplastic resins are used in combination include, but not limited to, a mode in which thermoplastic resins having different softening points or melting points are used in combination, and a mode in which thermoplastic resins having different average molecular weights are used in combination.

[Method for Producing Molding Material]

The term "molding material" used in the present description refers to a material for molding an impact absorbing member (molded product), and is also simply referred to as a "molding material".

As for the molding material for use in the present invention, for example, a two-dimensional random array mat which is a molding material precursor and a method for producing the same are described in detail in the descriptions of US Pat. No. 8,946,342 and JP-A-2013-49208.

[Method for Producing Impact Absorbing Member (Molded Product)]

1. Cold pressing method

As a molding method for producing the impact absorbing member (molded product) of the present invention, press molding (sometimes called compression molding) is used, and in particular, press molding using cold pressing is used. In the cold pressing method, for example, a molding material heated to a first predetermined temperature is charged into a mold set to a second predetermined temperature, and then pressurization and cooling are performed.

Specifically, when the thermoplastic resin constituting the molding material is crystalline, the first predetermined temperature is equal to or higher than the melting point, and the second predetermined temperature is lower than the melting point. When the thermoplastic resin is amorphous, the first predetermined temperature is equal to or higher than the glass transition temperature, and the second predetermined temperature is lower than the glass transition temperature.

That is, the cold pressing method includes at least the following steps A-1) and A-2).

Step A-1): a step of heating the molding material to a temperature equal to or higher than the melting point and equal to or lower than a decomposition temperature when the thermoplastic resin is crystalline, and to a temperature equal to or higher than the glass transition temperature and equal to or lower than the decomposition temperature when the thermoplastic resin is amorphous.

Step A-2): a step of arranging the molding material heated in step A-1) in a mold whose temperature is adjusted to be lower than the melting point when the thermoplastic resin is crystalline, and to be lower than the glass transition temperature when the thermoplastic resin is amorphous, and performing pressurization.

By performing these steps, the molding of the molding material can be completed.

Each of the steps described above needs to be performed in the order described above, but other steps may be included between the steps. The other steps include, for example, before step A-2), a shaping step of shaping in advance a shape of a cavity of the mold using a shaping mold different from the mold used in step A-2).

Step A-2) is a step of applying a pressure to the molding material to obtain an impact absorbing member having a desired shape, and the molding pressure at this time is not particularly limited, is preferably less than 20 MPa, and more preferably 10 MPa or less with respect to a projected area of the cavity of the mold.

As a matter of course, various steps may be included between the above steps during press molding, and for example, vacuum press molding in which press molding is performed under vacuum may be used.

2. Mold

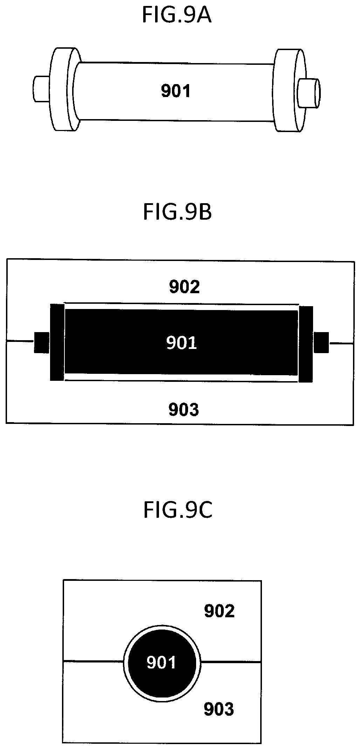

The mold in the present invention is not particularly limited, and it is preferable to use a mold having a molding surface and having a cylindrical, elliptical cylindrical, polygonal cylindrical, truncated conical, elliptical pyramid, or polygonal pyramid outer shape. A mold having a molding surface and having a cylindrical outer shape includes a mandrel 901 as shown in Figs. 9A to 9C. An end portion of 901 in Figs. 9A to 9C has a removable structure, and the molded product can be taken out after molding. Further, in Figs. 9B and 9C, 90I is shown in black for convenience, but is the same as 901 shown in Fig. 9A.

The mold, having a molding surface having an outer shape of a cylindrical shape, an elliptical cylindrical shape, a polygonal cylindrical shape, a truncated conical shape, an elliptical pyramid shape, or a polygonal pyramid shape, may be clogged inside or have a space inside (for example, a cylindrical mold).

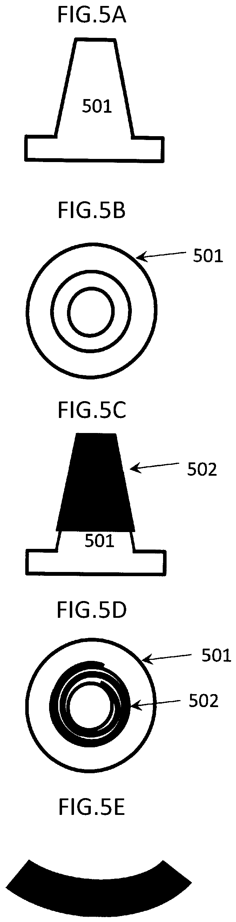

In addition, the mold, having the molding surface having the outer shape of the cylindrical shape, the elliptical cylindrical shape, the polygonal cylindrical shape, the truncated conical shape, the elliptical pyramid shape, or the polygonal pyramid shape, may have a portion having another shape. For example, as shown in 501 in Figs. 5A to 5E and 901 in Figs. 9A to 9C, the mold may have a mounting portion or the like may be provided on at least one of end portions.

3. Method of arranging (laminating) molding material

When charged into the mold, the molding material may be used alone (in one piece) or in a plurality of pieces according to the plate thickness of the target impact absorbing member. In the case of using a plurality of pieces of molds, the plurality of pieces of molds may be laminated in advance and heated, the heated molding material may be laminated and then charged into the mold, or the heated molding material may be sequentially laminated in the mold. It is preferable that the temperature difference between the molding material at the lowermost layer and the composite material at the uppermost layer in the case of lamination is small, and from this viewpoint, it is preferable to laminate before charging the molding material into the mold.

When producing a molded product by laminating a plurality of pieces of molding materials, it is preferable that the molding materials are arranged to have an annulus region in which the carbon fibers are dispersed in the in-plane direction over the entire circumference of the outer tubular portion, so that for some layers of the laminated molding material, a molding material containing carbon fibers having a weight average fiber length of less than 1 mm is preferably used.

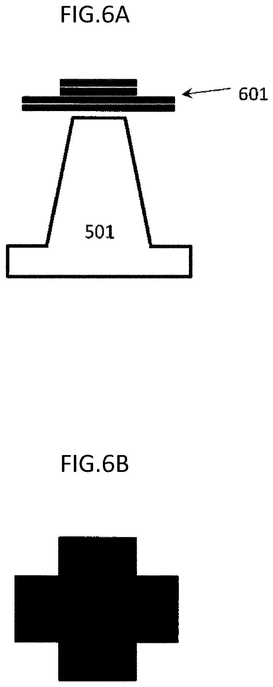

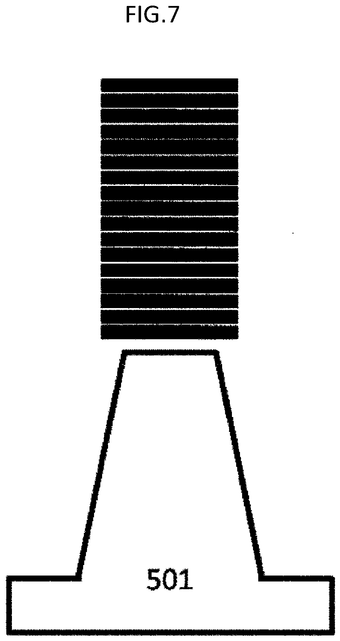

The method of arranging the molding material (charging method) in the present invention is not particularly limited. The molding material may be laminated on the mold, having a molding surface having the outer shape of the cylindrical shape, the elliptical cylindrical shape, the polygonal cylindrical shape, the truncated conical shape, the elliptical pyramid shape, or the polygonal pyramid shape, and arranged in a cross shape (Fig. 6B). Molding materials having relatively small sizes may be continuously laminated in the same direction (Fig. 7). Further, one piece of large rectangular molding material may be arranged and molded, but it is necessary to pay attention to wrinkles generated during the molding.

In addition to the cross shape shown in Fig. 6B, a plurality of pieces of molding materials may be laminated and arranged at different angles, but it is also necessary to pay attention to wrinkles generated during the molding.

The impact absorbing member produced by the production method of the present invention preferably has few wrinkles.

Preferably, the molding material is laminated on the mold, having a molding surface having the outer shape of the cylindrical shape, the elliptical cylindrical shape, the polygonal cylindrical shape, the truncated conical shape, the elliptical pyramid shape, or the polygonal pyramid shape, and is arranged in a cross shape (Fig. 6B). When molding materials having relatively small sizes are continuously laminated in the same direction, the molding material flows during press molding, so that the in-plane orientation of the carbon fibers contained in the molding material is difficult to maintain when forming the molded product. On the other hand, when the molding material is arranged in a cross shape, the molding upper mold is closed and the molding material becomes a cylindrical shape, an elliptical cylindrical shape, a polygonal cylindrical shape, a truncated conical shape, an elliptical pyramid shape, or a polygonal pyramid shape along the mold, so that after the molding upper mold is closed, the molding material is difficult to flow due to the molding pressure.

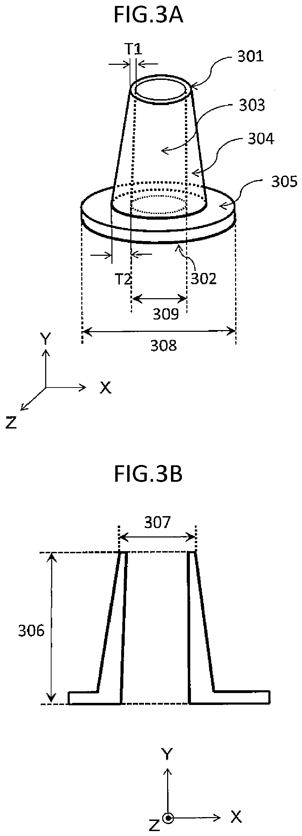

Further, when the impact absorbing member is formed by laminating the molding material as shown in Figs. 6A, 6B and Fig. 7, since one end portion of the outer tubular (one end portion of the outer tubular portion in the axial direction, for example, a portion indicated by 301 in Fig. 3A, which is sometimes called a top portion) is closed, it is preferable to remove the closed portion to obtain the outer tubular portion. The removal to form a tubular is based on the viewpoint of improving impact characteristics and reducing the weight.

4. Method of arranging (winding) molding material

The method of arranging the molding material in the present invention is not particularly limited. It is preferable to wind the molding material softened by heating around a molding surface of a mold for one or more turns, the mold having a cylindrical, elliptical cylindrical, polygonal cylindrical, truncated conical, elliptical pyramid, or polygonal pyramid outer shape, and to press-mold the molding material.

The mold having a molding surface and having a cylindrical, elliptical cylindrical, polygonal cylindrical, truncated conical, elliptical pyramid, or polygonal pyramid outer shape is preferably a molding lower mold or a core mold, and more preferably a core mold. That is, in the present invention, it is preferable to arrange the core mold around which the molding material is wound one or more turns between a molding upper mold and a molding lower mold, and to perform the cold press molding.

The core mold is also a type of mold, and is generally used by being arranged between the molding upper mold and the molding lower mold. For example, in Figs. 9A to 9C, the mandrel 901 is a core mold, which is arranged between a molding upper mold 902 and a molding lower mold 903 and used for press molding.

The molding material softened by heating is preferably a molding material obtained by heating the molding material to a temperature equal to or higher than the softening temperature of the thermoplastic resin in the molding material.

When press molding is performed by winding the molding material for one or more turns, the molding material does not flow much during the press molding, and the in-plane orientation of the carbon fibers is easily maintained before and after the molding. In other words, the in-plane orientation of the carbon fibers in the molding material is likely to be maintained when the molding material becomes an impact absorbing member (molded product). The press molding is more preferably performed by winding the molding material because the molding material can be arranged in the mold such that one end portion (For example, the portion indicated by 301 in Fig. 3A) of the outer tubular portion is not closed (hollowing out is not necessary for forming a cylindrical shape after molding).

5. Magnitude of spring back of molding material

In order to perform cold press molding using a molding material, it is necessary to preheat and heat the molding material to a predetermined temperature to soften and melt the molding material. When the thermoplastic resin becomes plastic state during the preheating of the molding material containing carbon fibers having a weight average fiber length of 1 mm to 100 mm (especially when a mat state where carbon fibers are deposited), the molding material expands due to the spring back of the carbon fibers and the bulk density of the molding material changes. When the bulk density changes during preheating, the molding material becomes porous, the surface area increases, and air flows into the molding material to promote thermal decomposition of the thermoplastic resin. Here, the magnitude of spring back is a value obtained by dividing the plate thickness of the molding material after preheating by the plate thickness of the molding material before preheating.

The magnitude of spring back tends to increase when the carbon fiber bundle contained in the molding material becomes highly open (single fiber rich) or the fiber length becomes long.

In the present invention, the magnitude of spring back of the molding material is more than 1.0 and less than 14.0. It is preferable the magnitude of spring back of the molding material is less than 14.0, because it is easy to wind the molding material around the mold and it is difficult for the molding material to protrude from the mold when charging the molding material.

In the case of press molding by winding the molding material on the mold for one or more turns (for example, in the case of press molding as shown in Figs. 9A to 9C), the spring back (expansion of the molding material) in the plate thickness direction of the molding material becomes a major issue as compared with the case of press molding without winding (for example, press molding as shown in Figs. 6A, 6B or Fig. 7). As shown in Figs. 6A, 6B or Fig. 7, the case of press molding without winding the molding material, the magnitude of spring back is preferably small, but even when the magnitude of spring back is large, since the molding material expands toward the molding upper mold, the molding material rarely protrudes from the molding cavity, which is thus unlikely to be a big issue.

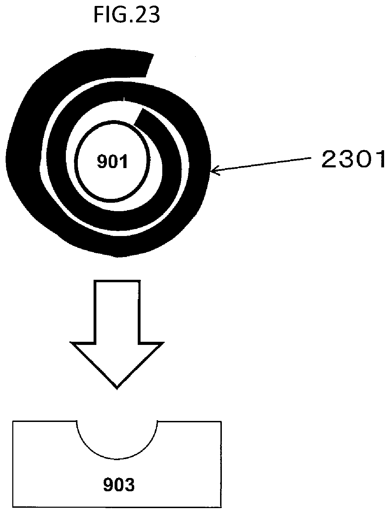

In contrast, in the case of press molding by winding the molding material on the mold for one or more turns, when the magnitude of spring back is large, the molding material may protrude from the mold (see Fig. 23). As shown in Fig. 23, in the case of press molding by winding a molding material 2301 on the core mold 901 for one or more turns, when the magnitude of spring back of the molding material is 14.0 or more, the molding material cannot enter the molding lower mold 903, and molding cannot be performed.

The magnitude of spring back of the molding material in the present invention is preferably more than 1.0 and 7.0 or less, more preferably more than 1.0 and 5.0 or less, still more preferably more than 1.0 and 3.0 or less, and even more preferably more than 1.0 and 2.5 or less.

6. Integral molding

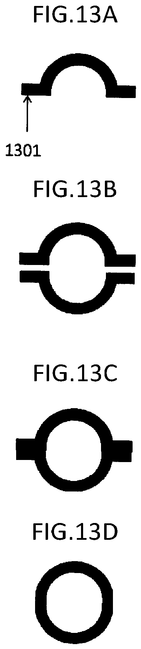

The impact absorbing member in the present invention is preferably produced by integral molding. When a hat-shaped molded product including a flange portion is produced, then the flange portion is cut off after welding, and an impact absorbing member is produced to obtain an outer tubular portion (Figs. 13A to 13D), if an impact is received, the welded portion tends to be the starting point of the fracture. In particular, when a closed cross-sectional shape of the outer tubular portion is circular, the outer tubular portion buckles outward or inward at the time of impact input and collapses to absorb the impact of energy, and the welded surface of the outer tubular portion produced by welding is peeled off, making the impact absorption difficult to stabilize. Therefore, it is preferable to produce the impact absorbing member by integral molding having no welded surface. Further, even when a mounting portion is provided, it is preferable to produce the impact absorbing member by integral molding.

7. Heating temperature

In the method for producing an impact absorbing member of the present invention, the core mold is arranged between the molding upper mold and the molding lower mold and cold press molding is performed. The cold pressing is preferably performed with maintaining a temperature of the core mold higher than the temperature of the molding upper mold or the molding lower mold, and, less than a temperature being 20°C lower than a melting point of the thermoplastic resin when the thermoplastic resin is a crystalline resin, or less than a temperature being 20°C lower than a glass transition temperature of the thermoplastic resin when the thermoplastic resin is an amorphous resin.
When the temperature of the core mold is maintained less than a temperature being 20°C lower than the melting point when the thermoplastic resin is a crystalline resin, or is maintained less than a temperature being 20°C lower than the glass transition temperature when the thermoplastic resin is an amorphous resin, removing the core (pulling the core mold out of the molding material) after molding becomes easy. On the other hand, when the temperature of the core mold is higher than the temperature of the molding upper mold or the molding lower mold, the fluidity during molding is improved. More preferably, the temperature of the core mold is higher than the temperatures of both the molding upper mold and the molding lower mold, and more preferably higher than a temperature being 10°C higher than both of the temperatures of the molding upper mold and the molding lower mold.
However, from the viewpoint of simplification in production, it is preferable that the temperatures of the molding upper mold, the molding lower mold, and the core mold are the same within the range of ±10°C.
When a double peak appears in the melting point, the melting point means the melting point on the high temperature side.

8. Preliminary shaping

In the method for producing an impact absorbing member of the present invention, it is preferable to subject the molding material to preliminary shaping before cold pressing, and then perform press molding. The preliminary shaping is to pre-shape the molding material into a shape close to that of the molded product, and is for facilitating loading of the molding material into the mold and the subsequent press molding. Specifically, when winding the molding material around the core mold, it is preferable to provide a space between the molding material and the core mold to perform preliminary shaping. When a little space in which the heated molding material does not adhere to the core mold is provided, the temperature of the preliminarily shaped molding material does not easily decrease, and the moldability is improved.
More specifically, a relationship between an area (also called "inner tube area") S1 of a region of the preliminarily shaped molding material facing the core mold by winding the molding material around the core mold and a molding area S2 of the core mold preferably satisfies 1.05 < S1/S2 < 1.3, and more preferably satisfies 1.1 < S1/S2 < 1.25. When a certain amount of gap is provided at the preliminary shaping stage, even a complicated shape can be easily molded.
The inner tube area S1 of the molding material is the area of the region of the molding material wound around the core mold facing the core mold (for one turn).

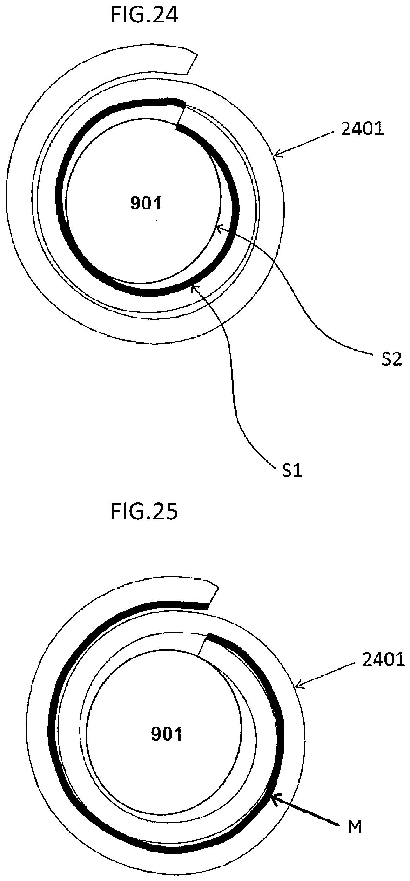

Fig. 24 is a schematic cross-sectional view explaining the inner tube area S1 of the molding material and the molding area S2 of the core mold. A molding material 2401 is wound around the core mold 901 in Fig. 24 by preliminary shaping, and the inner tube area S1 of the molding material refers to the area of the region shown by the thick line in the molding material 2401. In addition, the molding area S2 of the core mold refers to the area of the molding surface on an outer circumferential surface of the core mold 901.

9. Minimum length of overlapped portion in winding direction

In the method for producing an impact absorbing member of the present invention, the minimum length of an overlapped portion (also called "overlapped margin") of the wound molding material in the winding direction is preferably equal to or more than 5 times, more preferably 6 or more times, still more preferably equal to or more than 7 times, particularly preferably equal to or more than 8 times, and most preferably equal to or more than 9 times the thickness of the molding material.

The overlapped portion of the wound molding material is, for example, a portion M indicated by a thick line in Fig. 25.

In the molded product, a region formed by overlapping the molding material tends to have lower strength than a region not formed by overlapping the molding material, but can ensure the tensile strength when the minimum length of the overlapped margin is within the above range. In particular, when press molding is performed by winding the molding material around the core mold for one or more and less than two turns, the above effect are remarkable.

[Impact Absorbing Member (Molded Product)]

The impact absorbing member in the present invention is an impact absorbing member including a hollow-structural impact absorbing portion formed of an outer tubular portion and a hollow portion, and has an annulus region in which carbon fibers are dispersed in the in-plane direction over the entire circumference of the outer tubular portion. Since a molding material containing carbon fiber having a weight average fiber length of 1 mm or more and 100 mm or less is used, the outer tubular portion also contains the carbon fibers. The impact absorbing member may be simply referred to as a molded product.

1. Impact absorbing portion

The impact absorbing portion in the present invention has a hollow structure formed of an outer tubular portion and a hollow portion. The hollow portion refers to a space inside the outer tubular portion.

The outer tubular portion includes a tubular member, and may have protrusions or ribs as described later.

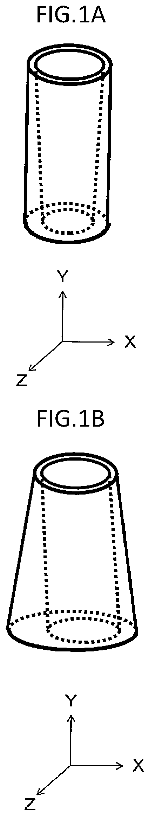

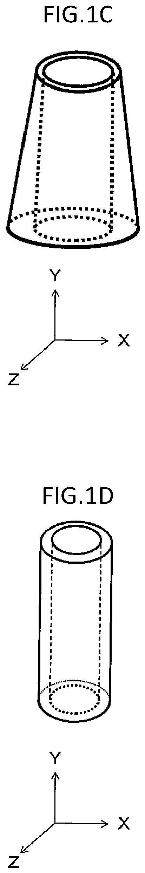

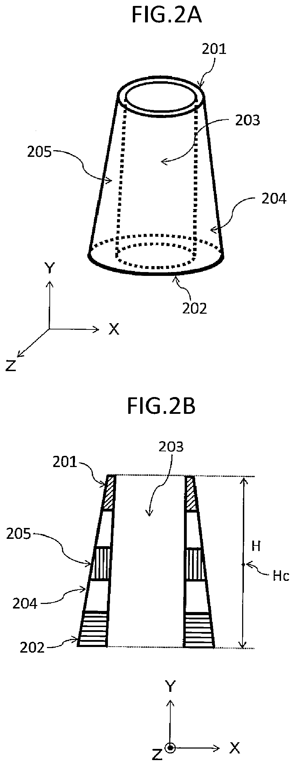

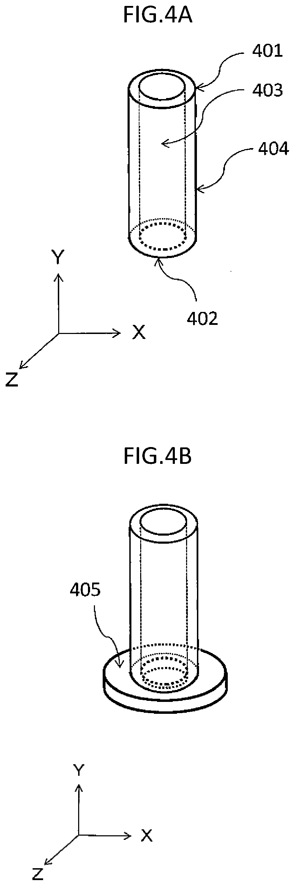

Figs. 1A to 1D are schematic views showing typical examples of the impact absorbing member of the present invention. The impact absorbing portion is formed of an outer tubular portion (204 in Figs. 2A and 2B, 304 in Fig. 3A, 404 in Fig. 4A) and a hollow portion (203 in Figs. 2A and 2B, 303 in Fig. 3A, 403 in Fig. 4A). In addition, the Y-axis direction in Fig. 1A to Fig. 4B indicates the impact absorbing direction (axial direction of the outer tubular portion) of the impact absorbing portion.

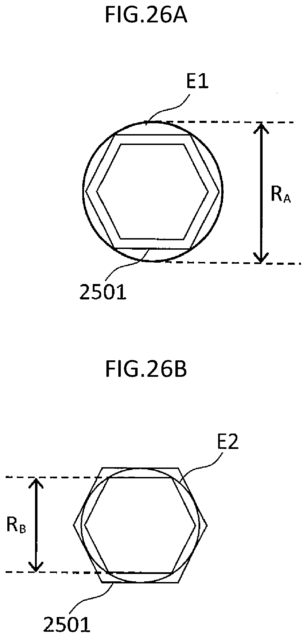

In Figs. 1A to 1D, as an example of the impact absorbing portion in the present invention, an example in which the shape (closed cross-sectional shape) of the cross section cut in the direction perpendicular to the impact absorbing direction is a perfect circle is shown. However, the impact absorbing portion in the present invention is not limited to such a shape, and the closed cross-sectional shape can be any shape. Therefore, for example, the closed cross-sectional shape may be an ellipse, a polygon such as a triangle, a quadrangle, a pentagon, or a hexagon (see, for example, Figs. 26A and 26B), or the closed cross-sectional shape may be a combination of a circle and a polygon.

When a diameter of a smallest circle among circles including the entire shape of an outer line of a cross section of the outer tubular portion of the impact absorbing member cut in the direction perpendicular to the impact absorbing direction is set to $R_A$, and a diameter of a largest circle among circles present inside the shape of the outer line without protruding from the outer line is set to $R_B$, it is preferable that $1 < R_A/R_B < 2$ is satisfied.

Figs. 26A and 26B shows, for example, a case where the shape of the cross section of the outer tubular portion of the impact absorbing member cut in the direction perpendicular to the impact absorbing direction is a hexagon. In Figs. 26A and 26B, a diameter $R_A$ of a smallest circle E1 among circles including the entire shape (hexagon) of an outer line 2501 of a cross section of the outer tubular portion of the impact absorbing member cut in the direction perpendicular to the impact absorbing direction and a diameter $R_B$ of a largest circle E2 present inside the shape (hexagon) of the outer line 2501 without protruding from the outer line 2501 satisfy $1 < R_A/R_B < 2$. In the above example, the shape of the outer line is a hexagon, but is not limited to a hexagon. Alternatively, ellipses and polygons other than hexagons can be similarly preferred as long as $1 < R_A/R_B < 2$ is satisfied.

The relationship of $1 < R_A/R_B$ means that the cross section is not a perfect circle, which is advantageous when the impact absorbing member is mounted on a vehicle. The relationship of $R_A/R_B < 2$ is preferred from the viewpoint of impact absorbing performance.

In particular, in the present invention, it is preferable that the shape of the cross section of the outer tubular portion of the impact absorbing member cut in the direction perpendicular to the impact absorbing direction is a polygon, $1 < R_A/R_B < 2$ is satisfied, and all apex angles of the polygon are 90 degrees or more, since it is easy to mount the impact absorbing member on the vehicle and the impact absorbing member has excellent impact absorbing performance.

Further, the impact absorbing member in the present invention may preferably be combined with a mounting portion (for example, 305 in Fig. 3A and 405 in Fig. 4B).

The length of the impact absorbing portion in the impact absorbing direction (for example, the length in the Y-axis direction in Figs. 1A to1D) is not particularly limited, and is preferably 50 mm or more, more preferably 100 mm or more, still more preferably 150 mm or more, and even more preferably 200 mm or more.

2. Dispersion in in-plane direction

2.1 Annulus region

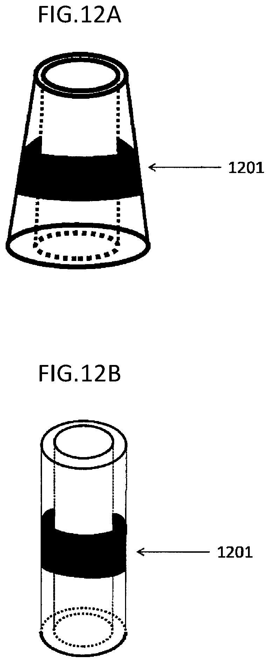

The impact absorbing member in the present invention has an annulus region in which carbon fibers are dispersed in the in-plane direction over the entire circumference of the outer tubular portion. The annulus region is a portion extending over the entire circumference of the outer tubular portion, and refers to, for example, a black-painted portion (1201 in Figs. 12A and 12B) referred to in Figs. 12A and 12B. The impact absorbing portion can also be produced by combining the annulus region and other portions. The expression "carbon fibers are dispersed in the in-plane direction" means that the carbon fibers are dispersed so as to make the fiber axes thereof face the in-plane direction. The annulus region of the impact absorbing member of the present invention preferably has an angle of 45° or less formed by the fiber axis of the carbon fiber with respect to the in-plane direction.

In the impact absorbing member of the present invention, the carbon fibers are dispersed in the in-plane direction over the entire circumference in at least one position of the outer tubular portion. That is, it means that the carbon fibers can be observed in layers dispersed in the thermoplastic resin, and a portion in which the carbon fiber layer is continuously dispersed over the entire circumference is present in at least one position of the outer tubular portion. When the closed cross section of the tube is a circle or ellipse, the annulus region has a shape of an annular ring. The in-plane direction will be described later.

The impact absorbing member of the present invention may have an annulus region in which carbon fibers are dispersed in the in-plane direction over the entire circumference in at least one region of the outer tubular portion in the thickness direction.

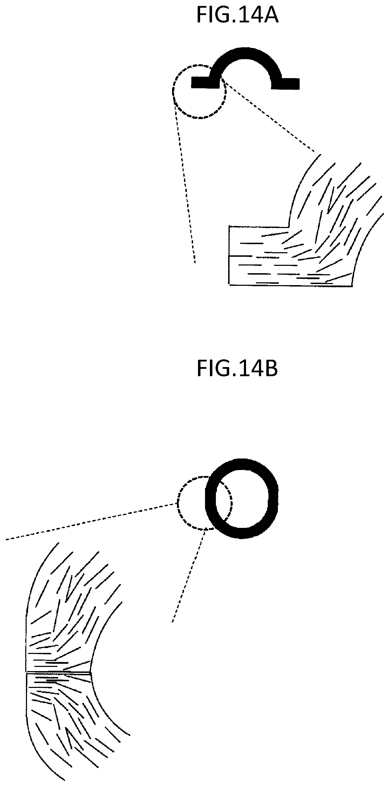

When a hat-shaped molded product including a flange portion is produced, then the flange portion is cut off after welding, and an impact absorbing member is produced to obtain an outer tubular portion (Figs. 13A to 13D), there is no annulus region in which carbon fibers are dispersed in the in-plane direction over the entire circumference of the outer tubular portion (the carbon fibers do not disperse in the in-plane direction over the entire circumference). As shown in Figs. 14A and 14B, the carbon fibers on the welded surface are dispersed in a direction perpendicular to the in-plane direction. In addition, as shown in Fig. 14B, it can be observed that the carbon fibers are dispersed in layers, but the layer is interrupted at the welded portion. It can be seen that the welded portion is easily fractured when receiving an impact.

In contrast, since the impact absorbing member of the present invention has an annulus region in which carbon fibers are dispersed in the in-plane direction over the entire circumference in at least one portion of the outer tubular portion in the axial direction, there is no starting point (welded portion) that causes fractures even when there are impacts from various directions. Therefore, the impact absorbing capacity from a specific direction is rarely reduced. Therefore, the impact absorbing member of the present invention is strong against impacts from various directions and has excellent impact absorbing performance.

Further, it is preferable that the carbon fibers are dispersed in the in-plane direction not only in the annulus region but also in the entire region of the outer tubular portion.

2.2 In-plane direction

The in-plane direction is a direction orthogonal to the plate thickness direction of the outer tubular portion. While the longitudinal direction and the width direction each point to a fixed direction, the in-plane direction means an indefinite direction on a curved surface (a parallel surface orthogonal to the plate thickness direction) along the outer tubular portion. In the annulus region, it is preferable that 80 vol% or more of the carbon fibers are dispersed in the in-plane direction, and more preferably 90 vol% or more of the carbon fibers are dispersed in the in-plane direction.

2.3 Random dispersion in two-dimensional direction

It is preferable that the carbon fibers are randomly dispersed in a two-dimensional direction in the in-plane direction. When press molding is performed without flowing the molding material, the morphology of the carbon fibers is almost maintained before and after molding. Therefore, similarly, the carbon fibers contained in the impact absorbing member (molded product) obtained by molding the molding material are preferably two-dimensionally randomly dispersed in the in-plane direction of the impact absorbing member (molded product).

Here, the expression "two-dimensionally randomly dispersed" means a state where the carbon fibers are randomly oriented in the in-plane direction of the molding material instead of in a specific direction as in one direction, and are arranged in the sheet surface without showing a specific direction as a whole. The molding material (or molded product) obtained by using discontinuous fibers dispersed randomly in two dimensions is a substantially isotropic molding material (or molded product) having no in-plane anisotropy.

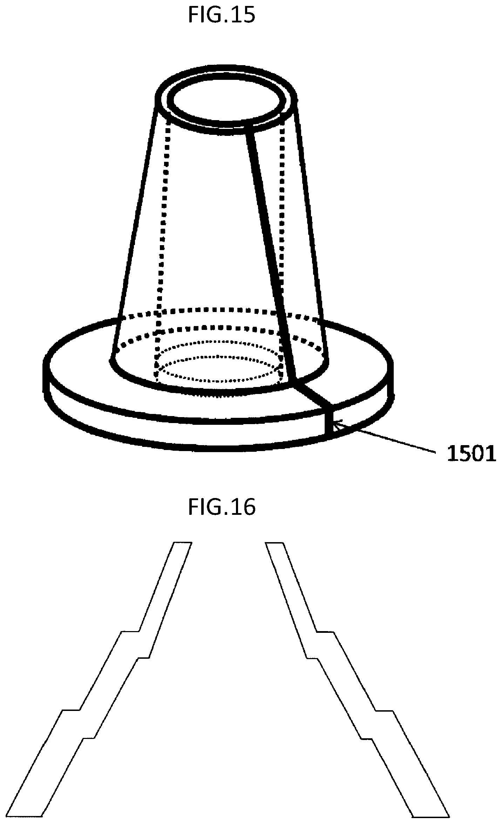

The degree of orientation of two-dimensional randomness is evaluated by obtaining the ratio of tensile elastic moduli in two directions orthogonal to each other. When a ratio ($E\delta$) obtained by dividing the large one by the smaller one of the measured tensile elastic moduli in any direction of the impact absorbing member and in the direction orthogonal to the above direction is 5 or less, more preferably 2 or less, and still more preferably 1.5 or less, it can be evaluated that the carbon fibers are dispersed randomly in two dimensions. Since the impact absorbing portion is a curved surface, as a method for evaluating the two-dimensional random dispersion in the in-plane direction, it is preferable to make a notch as shown in 1501 in Fig. 15 and heat the impact absorbing portion to a softening temperature or higher to return the impact absorbing portion to a flat plate shape and perform solidification. Thereafter, when a test piece is cut out and the tensile elastic modulus is obtained, the random dispersion state in the two-dimensional direction can be confirmed.

3. Mounting portion

In the impact absorbing member of the present invention, it is preferable that a mounting portion is provided at end portion of the outer tubular portion, and the mounting portion contains carbon fibers having a weight average fiber length of 1 mm or more and 100 mm or less and a thermoplastic resin, in which the carbon fibers are present across the outer tubular portion toward the mounting portion.

In the present invention, since the outer tubular portion contains carbon fibers, there is no adhesive portion between the outer tubular portion and the mounting portion and the carbon fibers are present across the outer tubular portion toward the mounting portion, whereby a mounting portion having higher mechanical properties is formed. Therefore, high physical properties can be maintained even when an impact is applied. In order to produce such an impact absorbing member, the impact absorbing portion and the mounting portion may be integrally molded.

Preferably, the carbon fibers, which are present across the outer tubular portion toward the mounting portion, are present at the interface with the mounting portion in an amount of 400 or more/mm$^2$. The mounting portion forms a joint portion when mounting on a vehicle body or the like.

4. Thickness of impact absorbing member

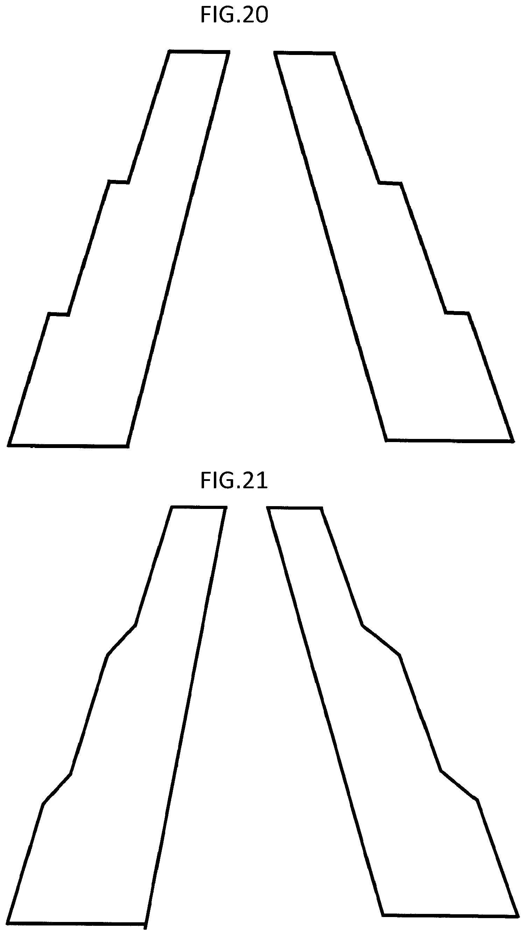

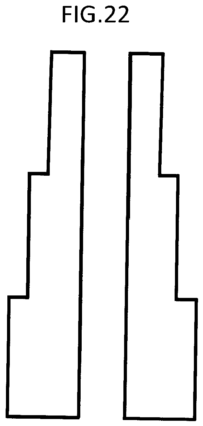

It is preferable that the thickness is uneven that the thickness increases from one end portion (201 in Figs. 2A and 2B and 301 in Fig. 3A) to the other end portion (202 in Figs. 2A and 2B and 302 in Fig. 3A) of the outer tubular portion. In this case, since the fracture occurs in order from one end portion (impact input side) to the other end portion, the entire impact absorbing portion can be used to absorb the impact. When the thickness is constant, it is difficult to determine the starting point at which the fracture first occurs when an impact is applied. The structure having an uneven thickness may gradually uneven toward the other end as shown in Fig. 2B, Fig. 3B, and Fig. 19, or may be a structure having an uneven thickness by increasing an outer tubular region having a uniform thickness stepwise (discontinuously), as shown in Fig. 20 to Fig. 22. In addition, the structure having an uneven thickness may be a structure having an uneven thickness by changing the outer tubular region having a uniform thickness stepwise (discontinuously), as shown in Fig. 16.

When the impact absorbing member of the present invention has an uneven thickness that the thickness increases from one end portion to the other end portion of the outer tubular portion, the rate of increase in thickness from one end portion to the other end portion is preferably a positive value (however, a portion where the rate of increase in thickness is 0 may be included). That is, it is preferable that the thickness gradually increases from one end portion to the other end portion of the outer tubular portion (however, a portion having a constant thickness may be provided), and it is preferable that there is no portion that becomes thin after the thickness has been increased (for example, Figs. 2A and 2B, Figs. 3A and 3B, and Fig. 19 to Fig. 22).

When the impact absorbing member in the present invention has an uneven thickness that the thickness increases from one end portion to the other end portion of the outer tubular portion, it is preferable that the mounting portion is provided at the other end portion (thicker end portion) of the outer tubular portion, and the mounting portion contains carbon fibers having a weight average fiber length of 1 mm or more and 100 mm or less and a thermoplastic resin, in which the carbon fibers are present across the outer tubular portion toward the mounting portion.

It is impossible for a pipe-shaped impact absorbing member produced by ordinary extrusion molding to have an uneven thickness. However, by using press molding, which is a preferred embodiment of the present invention, it is possible to produce an outer tubular portion having an uneven thickness.

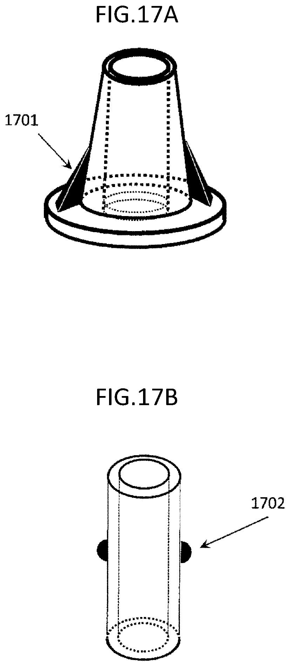

The degree of uneven thickness is not particularly limited, and a relationship between a thickness T1 at the one end portion of the outer tubular portion and a thickness T2 at the other end portion of the outer tubular portion preferably satisfies 1.0 < T2/T1 < 3.0, and more preferably satisfies 1.0 < T2/T1 < 2.0. Even when the mounting portion is provided, the thickness T2 at the other end portion is the thickness at the other end portion of the outer tubular portion, and the thickness and size of the mounting portion are not taken into consideration. Further, when the impact absorbing member provided with ribs described in Fig. 17A and protrusions described in Fig. 17B is produced, these portions are not taken into consideration in terms of thickness.

5. E1 and E2

In the present invention, 0.7 < E1/E2 < 1.3 is satisfied.

E1 is a tensile elastic modulus in the direction perpendicular to the impact absorbing direction at one end portion of the outer tubular portion. E2 is a tensile elastic modulus in the direction perpendicular to the impact absorbing direction at a central portion of the outer tubular portion.

The one end portion of the outer tubular portion refers to a region from one end in the axial direction toward the other end of the outer tubular portion up to 20% of the length of the outer tubular portion in the axial direction. For example, in Fig. 2B, the one end portion 201 of the outer tubular portion 204 is a region (region shown by oblique lines) from one end in the axial direction (Y-axis direction) toward the other end of the outer tubular portion 204 up to 20% of the length of the outer tubular portion in the axial direction.

The central portion of the outer tubular portion refers to a region combining a region from a midpoint of the length (height) of the outer tubular portion in the axial direction to 10% of the length of the outer tubular portion in the axial direction toward one end and a region from the midpoint to 10% of the length of the outer tubular portion in the axial direction towards the other end. For example, in Fig. 2B, a central portion 205 of the outer tubular portion 204 refers to a region (region indicated by vertical lines) combining a region from a midpoint Hc of the length (height) H of the outer tubular portion 204 in the axial direction (Y-axis direction) to 10% of the length of the outer tubular portion in the axial direction toward one end and a region from the midpoint Hc to 10% of the length of the outer tubular portion in the axial direction towards the other end.

The tensile elastic modulus E1 (or E2) in the direction perpendicular to the impact absorbing direction at the one end portion (or the central portion) of the outer tubular portion is E1 (or E2) at the one end portion (or the central portion) of the outer tubular portion obtained by cutting the produced impact absorbing member in the impact absorbing direction (for example, the Y-axis direction in Fig. 1A to Fig. 4B and Fig. 19) (for example, cutting the impact absorbing member in Fig. 15 along a line 1501), performing heating, softening the thermoplastic resin, returning the impact absorbing member into a flat plate shape, cutting a region corresponding to the one end portion (or the central portion) of the outer tubular portion from the flat plate to make a test piece, performing a tensile test based on the direction perpendicular to the impact absorbing direction (circumferential direction of the outer tubular portion), and measuring the tensile elastic modulus.

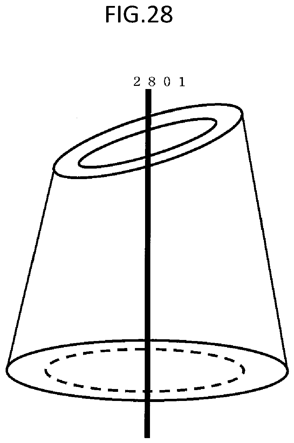

The impact absorbing direction is defined by the axial direction of the outer tubular portion (a linear direction connecting a center on one end surface and a center on the other end surface, for example, the linear direction of 2801 for the impact absorbing member in Fig. 28), and does not mean the direction at the time of an actual collision. For example, when the impact absorbing member of the present invention is adopted in an automobile, it is difficult to predict from which direction the impact will come.

The center on one end surface (center on the other end surface) means the center of the smallest circle among the circles including the entire shape of the outer line of the surface forming one end (the other end) of the outer tubular portion.

When 0.7 < E1/E2 < 1.3 is satisfied, the fiber orientation between the one end portion and the central portion is almost the same, so that the impact absorbing capacity is stable from the one end portion to the central portion. More specifically, within this range, uniform impact absorbing capacity can be ensured not only for impacts from the axial direction of the outer tubular portion but also for impacts from various directions.

Preferably 0.8 < E1/E2 < 1.2 is satisfied, more preferably 0.9 < E1/E2 < 1.1 is satisfied, and even more preferably 0.95 < E1/E2 < 1.05 is satisfied.

In the case of performing molding by winding the molding material around a mandrel, molding is often performed when the molding material hardly flows in the central portion of the outer tubular portion and flows slightly in the one end portion, and the fibers are oriented in the axial orientation of the outer tubular portion with the molding flow. Therefore, the tensile elastic modulus in the axial direction of the outer tubular at the one end portion tends to be high (the tensile elastic modulus in the circumferential direction tends to be low). In other words, preferably 0.7 < E1/E2 < 1.0 is satisfied, more preferably 0.8 < E1/E2 < 1.0 is satisfied, and even more preferably 0.9 < E1/E2 < 1.0 is satisfied.

6. Relationship between E1 and E3

The impact absorbing member in the present invention preferably satisfies 0.7 < E1/E3 < 1.3.

Here, E3 is a tensile elastic modulus in the direction perpendicular to the impact absorbing direction at the other end portion of the outer tubular portion.

E3 is obtained in the same manner as E1. Similar to the above, within the above range, the fiber orientation between the one end portion and the other end portion is almost the same, so that the impact absorbing capacity is stable from the one end portion to the other end portion. More specifically, within this range, uniform impact absorbing capacity can be ensured not only for impacts from the axial direction of the outer tubular portion but also for impacts from various directions.

The other end portion of the outer tubular portion refers to a region from an end in the axial direction opposite to the one end portion of the outer tubular portion to 20% of the length of the outer tubular portion in the axial direction toward the one end portion. For example, in Fig. 2B, the other end portion 202 of the outer tubular portion 204 refers to a region (region indicated by horizontal lines) from an end in the axial direction (Y-axis direction) opposite to the one end portion 201 of the outer tubular portion to 20% of the length of the outer tubular portion in the axial direction toward the one end portion 201.

More preferably 0.8 < E1/E3 < 1.2 is satisfied, still more preferably 0.9 < E1/E3 < 1.1 is satisfied, and particularly preferably 0.95 < E1/E3 < 1.05 is satisfied.

Examples

Hereinafter, the present invention will be specifically described with reference to Examples, but the present invention is not limited thereto.

1. Raw materials used in the following Production Examples and Examples are as follows. The decomposition temperature is a measurement result by thermogravimetric analysis.

- PAN-based carbon fibers
  Carbon fibers "Tenax" (registered trademark) STS40-24K (average fiber diameter: 7 $\mu$m), manufactured by TEIJIN LIMITED.
- Polyamide 6

    Hereinafter, may be abbreviated as PA6,
    a crystalline resin, melting point: 225°C, decomposition temperature (in air): 300°C.

2. Values in the Examples were determined according to the following method.

(1) Analysis of volume ratio (Vf) of carbon fibers

An impact absorbing member (molded product) was burned in a furnace at 500°C for 1 hour to remove a thermoplastic resin, and the masses of the carbon fibers and the thermoplastic resin were calculated by weighing the mass of the sample before and after the treatment.

Next, the volume ratios of the carbon fibers and the thermoplastic resin were calculated by using a specific gravity of each component. The volume ratio of the carbon fibers contained in the molding material is represented by Vf.

$$Vf = 100 \times \text{volume of carbon fibers}/(\text{volume of carbon fibers} + \text{volume of}$$
$$\text{thermoplastic resin})$$

(2) Analysis of weight average fiber length of carbon fibers contained in impact absorbing member (molded product)

With respect to the weight average fiber length of the carbon fibers contained in the impact absorbing member (molded product), the impact absorbing member was put into a furnace at 500°C for about 1 hour to remove the thermoplastic resin, then lengths of 100 randomly extracted carbon fibers were measured and recorded to a unit of 1 mm with a caliper and a loupe, and the weight average fiber length (Lw) was determined according to the following formula from the measured lengths of all the carbon fibers (Li, where i = an integer of 1 to 100).

$$Lw = (\Sigma Li^2)/(\Sigma Li) \ \text{...... Equation (b)}$$

The weight average fiber length of the carbon fibers contained in the molding material can also be measured by the same method as described above.

(3) Magnitude of spring back

The molding material was cut into 100 mm x 100 mm and two pieces thereof were overlapped, a thermocouple was inserted in the central portion of the mating surface, the pieces were put into a preheating furnace heated to a heater temperature of 340°C, heating was performed until the thermocouple temperature was 275°C. When the thermocouple temperature was 275°C, the pieces were taken out from the furnace, cooled and solidified, and the thickness after preheating was measured. The magnitude of spring back is the ratio of the thickness before preheating to the thickness after preheating, and is expressed by the following formula.

Magnitude of spring back = thickness (mm) after preheating/thickness (mm) before preheating

(4) Dispersion state of carbon fibers in annulus region

The produced impact absorbing member was cut in the impact absorbing direction (Y-axis direction in Fig. 1A to Fig. 4B and Fig. 19) (cut along the line 1501 in Fig. 15) and heated to soften the thermoplastic resin, and was returned to a flat plate shape. A test piece was cut from the flat plate, a tensile test was performed with reference to any direction of the flat plate and a direction orthogonal to the direction, the tensile elastic modulus was measured, and the ratio ($E\delta$) obtained by dividing the larger one by the smaller one of the measured values of the tensile elastic modulus was obtained. The closer the elastic modulus ratio is to 1, the more isotropic the material is. In Examples, when the elastic modulus ratio is 1.3 or less, it is evaluated as having excellent isotropy.

For the tensile elastic modulus, a universal testing machine manufactured by Instron was used with reference to JIS K 7164:2005. Regarding the shape, the test piece was a 1B system A type test piece. The distance between the chucks was 115 mm, and the test speed was 10 mm/min.

(5) Relationship between E1 and E2

In the same manner as in (4) above, the impact absorbing member was returned to a flat plate shape, test pieces were cut out from the one end portion and the central portion, a tensile test was performed with reference to the circumferential direction of the outer tubular portion, the tensile elastic modulus was measured, and E1/E2 was calculated.

When the size of the impact absorbing member makes it impossible to create a test piece of a specified size from only a region of the one end portion and the central portion of the outer tubular portion, test pieces are appropriately prepared so as to include each region.

(6) Relationship between E1 and E3

In the same manner as in (5) above, the tensile elastic modulus E3 in the direction perpendicular to the impact absorbing direction at the other end portion of the outer tubular portion was obtained, and the value (E1/E3) obtained by dividing E1 by E3 was obtained.

[Production Example 1] Production of molding material

Carbon fibers "Tenax" (registered trademark) STS40-24K (average fiber diameter: 7 $\mu$m, number of single fibers: 24,000) manufactured by TEIJIN LIMITED and cut to an average fiber length of 20 mm were used as the carbon fibers, and a Nylon 6 resin A1030 manufactured by Unitika Ltd. was used as the resin. Based on the method described in US Pat. No. 8,946,342, a molding material precursor of carbon fibers and nylon 6 resin was created, in which carbon fibers were randomly dispersed in two dimensions and in which the carbon fiber was 1456 g/m$^2$ and the nylon 6 resin was 1620 g/m$^2$. The obtained molding material precursor was heated at 2.0 MPa for 5 minutes in a press machine heated to 260°C to obtain a molding material (i) having an average thickness of 2.5 mm.

When the carbon fibers contained in the obtained molding material (i) were analyzed, the volume ratio (Vf) of the carbon fibers was 35%, the fiber length of the carbon fibers was constant, and the weight average fiber length was 20 mm. In addition, the magnitude of spring back of the molding material (i) was 1.7.

[Production Example 2] Production of molding material

A molding material (ii) was obtained in the same manner as in Production Example 1, except that the magnitude of spring back of the molding material was adjusted to 3.0 by designing the open state of the carbon fiber bundle to be slightly higher.

[Production Example 3] Production of molding material

A molding material (iii) was obtained in the same manner as in Production Example 1, except that the magnitude of spring back of the molding material was adjusted to 5.0 by designing the open state of the carbon fiber bundle to be higher.

[Production Example 4] Production of molding material

A molding material (iv) was obtained in the same manner as in Production Example 1, except that the magnitude of spring back of the molding material was adjusted to 15.0 by designing the open state of the carbon fiber bundle to be higher and setting the average fiber length to 40 mm.

[Example 1]

The shape of the target impact absorbing member was set to the shape shown in Fig. 3 in which a mounting portion was provided on a truncated conical outer tubular portion. Regarding the dimension of the impact absorbing member, the height (306 in Fig. 3B) was 150 mm, the outer diameter (308 in Fig. 3A) of the mounting portion was 190 mm, the outer diameter (307 in (b) in Fig. 3) of the one end portion of the outer tubular portion was 75 mm, the inner diameter (309 in Fig. 3A) of the other end portion of the outer tubular portion was 100 mm, the thickness T1 of the one end portion of the outer tubular portion (the thickness of the end portion on the impact input side, T1 in Fig. 3A) was 5 mm, and the thickness T2 of the other end portion (the thickness of the outer tubular portion on the side opposite to the impact input side, T2 in Fig. 3A) was 8 mm.
The molding material (i) obtained in Production Example 1 was cut into an arc shape in Fig. 5E (arc inner radius: 338 mm, arc inner length: 404 mm, arc outer radius: 477 mm, arc outer length: 570 mm), and the cut molding material was dried with a hot air dryer at 120°C for 4 hours, and then heated to 275°C with an infrared heater.
As the molding lower mold, a truncated conical mold (501 in Figs. 5A to 5E) provided with a base for forming the mounting portion was prepared. Further, as the molding upper mold, a mold having a corresponding shape was prepared (not shown). The molding upper mold and the molding lower mold were set to 140°C, the heated molding material was wound for two turns as shown in Figs. 5C and 5D and pressed at a pressing pressure of 10 MPa for 1 minute, to obtain an impact absorbing member including a hollow-structural impact absorbing portion formed of the outer tubular portion and the hollow portion shown in Figs. 3A and 3B.
When winding the molding material, a space was provided between the molding material and the truncated conical molding lower mold, the molding material was subjected to preliminary shaping, and the relationship between the inner tube area S1 of the molding material (area of the region facing the core mold of the preliminarily shaped molding material) and the molding area S2 of the molding lower mold was designed as shown in Table 1.
When the molding upper mold was lowered and came into contact with the molding material, the molding material slid down along the molding lower mold, and immediately before applying the molding pressure, the molding material was shaped almost along the molding lower mold, so that the molding material hardly flowed due to the molding pressure, and an impact absorbing member was obtained. The results are shown in Table 1.

[Example 2]

An impact absorbing member was obtained in the same manner as in Example 1, except that four pieces of 270 mm × 150 mm were cut from the molding material (i), and as shown in Figs. 6A and 6B, every two pieces were overlapped in the cross direction to charge the molding material, and after molding, one end portion (top portion) of the outer tubular portion was removed to obtain an outer tubular portion. When the molding upper mold was lowered and came into contact with the molding material, the molding material was shaped along the lower mold, and immediately before applying the molding pressure, the molding material was drawn and shaped along the lower mold. Therefore, the molding material did not flow so much due to the molding pressure, and an impact absorbing member was obtained. The results are shown in Table 1.

[Example 3]

An impact absorbing member was obtained in the same manner as in Example 2, except that 17 pieces of 98 mm × 98 mm were cut from the molding material (i), and as shown in Fig. 7, the pieces were overlapped to charge the molding material. The molding material hardly moved by the time the molding upper mold was lowered and the pressure was applied. Therefore, the molding material flowed by the molding pressure to perform shaping (flow molding), and an impact absorbing member was obtained. The results are shown in Table 1.

[Example 4]

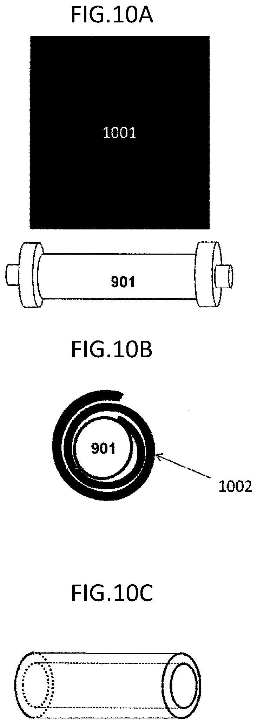

The molding material (i) obtained in Production Example 1 was cut into 120 mm × 270 mm (Fig. 10A), and the cut molding material was dried with a hot air dryer at 120°C for 4 hours, and then heated to 275°C with an infrared heater.

As the mold (core mold), the mandrel 901 shown in Fig. 10A and the molding upper mold the molding lower mold shown in in Figs. 9B and 9C were prepared. The shape of the mandrel was designed such that a cylindrical product having a product shape (Fig. 4A) with an outer diameter of 45 mm, an inner diameter of 35 mm, and a height of 120 mm could be obtained.

The molding upper mold and the molding lower mold were set to 140°C, and the temperature of the mandrel (core mold) was set to 160°C. As shown in Fig. 10B, the heated molding material was wound for two turns while providing a space between the core mold and the molding material, and the molding material was subjected to preliminary shaping and pressed at a pressing pressure of 10 MPa for 1 minute, to obtain a cylindrical impact absorbing member. Since immediately before applying the molding pressure, the molding material was subjected to preliminary shaping almost along the mandrel, the molding material hardly flowed due to the molding pressure, and an impact absorbing member was obtained. The results are shown in Table 1.

[Example 5]

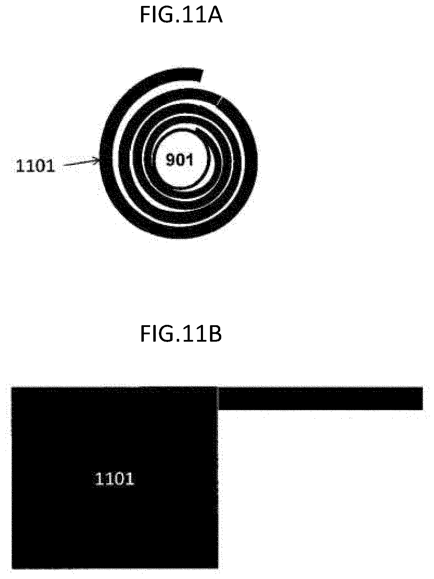

An impact absorbing member was obtained in the same manner as in Example 4, except that a mounting portion was provided (see Fig. 4B), the outer diameter of the mounting portion was set to 65 mm, and for the molding material, a molding material of 10 mm × 270 mm was additionally devised and prepared for winding (see 1101 in Figs. 11A and 11B).

The results are shown in Table 1.

[Examples 6 and 7]

An impact absorbing member was obtained in the same manner as in Example 4, except that S1/S2, a relationship between the inner tube area S1 of the molding material and the molding area S2 of the core mold, was set as shown in Table 2.

In Example 6 with S1/S2 of 1.0, an impact absorbing member having an uniform fiber orientation at the one end portion, the central portion, and the other end portion of the impact absorbing member could be produced, but the production efficiency was inferior because the preliminary shaping was performed too accurately.

In Example 7 with S1/S2 of 1.4, since the preliminary shaping was a little inaccurate, the uniformity in fiber orientation at the one end portion, the central portion, and the other end portion of the impact absorbing member was lower than that of Example 4.

[Examples 8 and 9]

An impact absorbing member was obtained in the same manner as in Example 4, except that the temperature of the core mold (mandrel) was set as shown in Table 2.

In Example 8, since the temperature of the core mold was set low, the molding material solidified a little earlier, and a small amount of voids remained in the impact absorbing member. There was no problem in practical use, but the impact absorbing capacity was slightly inferior to that of Example 4.

In Example 9, as a result of increasing the temperature of the core mold, the moldability (fluidity of the molding material) was improved and the appearance of the impact absorbing member was improved, but it took time to remove the core mold.

[Examples 10 and 11]

An impact absorbing member was obtained in the same manner as in Example 4, except that the molding material (ii) or (iii) was used.

In Example 10, since the magnitude of spring back was not too large as compared with Example 4, molding could be performed without any problem.

In Example 11, since the magnitude of spring back was slightly larger than that in Example 4, it took time for preliminary shaping and the production efficiency was slightly inferior.

[Comparative Example 1]

The molding material (i) was cut out and heated to 275°C and cold press molding was performed to produce a hat-shaped molded product including a flange portion (Fig. 13A), the flange portion was vibration-welded, and then the protruding flange portion was cut off, thereby obtaining an impact absorbing member in Fig. 3A. In order to measure the dispersion state of the carbon fibers in the annulus region, the produced impact absorbing member was cut in the impact absorbing direction (Y-axis direction in Figs. 3A and 3B) (cut along the line 1501 in Fig. 15) and heated to soften the thermoplastic resin, and was returned to a flat plate shape. However, the in-plane orientation of the carbon fibers was interrupted at the vibration-welded portion, and thus the evaluation was interrupted.

[Comparative Example 2]

An impact absorbing member was obtained in the same manner as in Comparative Example 1, except that a cylindrical shape shown in Fig. 4B was used.
When the impact absorbing members of Comparative Examples 1 and 2 were subjected to an impact test, the impact absorbing capacity was lower than that of each Example because the welded surface was peeled off.
The impact absorbing member in Examples 1 to 11 had an annulus region in which carbon fibers were dispersed in the in-plane direction over the entire circumference of the outer tubular portion. The impact absorbing member in Comparative Examples 1 and 2 had no annulus region in which carbon fibers were dispersed in the in-plane direction over the entire circumference of the outer tubular portion.

[Comparative Example 3]

An impact absorbing member was obtained in the same manner as in Example 4, except that the molding material (iv) was used. Since the magnitude of spring back was larger than that of Example 4 (Fig. 23), the molding material could not be fitted into the mold and could not be molded.

[Table 1]

| | Example 1 | Example 2 | Example 3 | Example 4 | Example 5 | Comparative Example 1 | Comparative Example 2 |
|---|---|---|---|---|---|---|---|
| Impact absorbing member | | | | | | | |
| Dispersion state of carbon fibers in annulus portion | Excellent in isotropy | Excellent in isotropy | Carbon fibers are orientated in impact absorbing direction | Excellent in isotropy | Excellent in isotropy | In-plane orientation of carbon fibers was interrupted at welded portion | In-plane orientation of carbon fibers was interrupted at welded portion |
| Shape | Fig. 3A | Fig. 3A | Fig. 3A | Fig. 4A | Fig. 4B | Fig. 3A | Fig. 4B |
| Molding material | | | | | | | |
| Type | (i) | (i) | (i) | (i) | (i) | (i) | (i) |
| Magnitude of spring back | 1.7 | 1.7 | 1.7 | 1.7 | 1.7 | 1.7 | 1.7 |
| Production method | | | | | | | |
| Charging method of molding material | Winding for molding | Lamination in cross shape for molding | Lamination in 17 pieces for molding | Winding for molding | Winding for molding | Two hat-shaped molded products are created and vibration welding was performed for production | Two hat-shaped molded products are created and vibration welding was performed for production |
| Figure | Figs. 5A to 5E | Figs. 6A and 6B | Fig. 7 | Figs. 10A to 10C | Figs. 11A and 11B | | |
| Flow during mo lding | N o | No | Yes | No | No | | |
| S1/S2 | 1.1 | - | - | 1.2 | 1.2 | - | - |
| Temperature (°C) of molding upper mold and molding lower mold | 140 | 140 | 140 | 140 | 140 | 140 | 140 |
| Temperature (°C) of core mold | 140 | 140 | 140 | 160 | 160 | - | - |
| E1/E2 | 0.90 | 1.10 | 1.20 | 0.85 | 0.85 | Unmeasurable | Unmeasurable |
| E1/E3 | 1.05 | 1.20 | 1.30 | 0.85 | 0.90 | Unmeasurable | Unmeasurable |

[Table 2]

|  | Example 6 | Example 7 | Example 8 | Example 9 | Example 10 | Example 11 |
|---|---|---|---|---|---|---|
| Impact absorbing member |  |  |  |  |  |  |
| Dispersion state of carbon fibers in annulus portion | Excellent in isotropy | Excellent in isotropy | Excellent in isotropy | Excellent in isotropy | Excellent in isotropy | Excellent in isotropy |
| Shape | Fig. 4A | Fig. 4A | Fig. 4A | Fig. 4A | Fig. 4A | Fig. 4A |
| Molding material |  |  |  |  |  |  |
| Type | (i) | (i) | (i) | (i) | (ii) | (iii) |
| Magnitude of spring back | 1.7 | 1.7 | 1.7 | 1.7 | 3.0 | 5.0 |
| Production method |  |  |  |  |  |  |
| Charging method of molding material | Winding for molding | Winding for molding | Winding for molding | Winding for molding | Winding for molding | Winding for molding |
| Figure | Figs. 10A to 10C | Figs. 10A to 10C | Figs. 10A to 10C | Figs. 10A to 10C | Figs. 10A to 10C | Figs. 10A to 10C |
| Flow during molding | No | No | No | No | No | No |
| S1/S2 | 1.0 | 1.4 | 1.1 | 1.1 | 1.1 | 1.1 |
| Temperature (°C) of molding upper mold and molding lower mold | 140 | 140 | 140 | 140 | 140 | 140 |
| Temperature (°C) of core mold | 160 | 160 | 140 | 180 | 160 | 160 |
| E1/E2 | 1.00 | 0.80 | 0.85 | 0.85 | 0.90 | 0.92 |
| E1/E3 | 1.00 | 1.20 | 0.92 | 0.92 | 1.08 | 1.04 |

[Reference Examples 1 to 4]

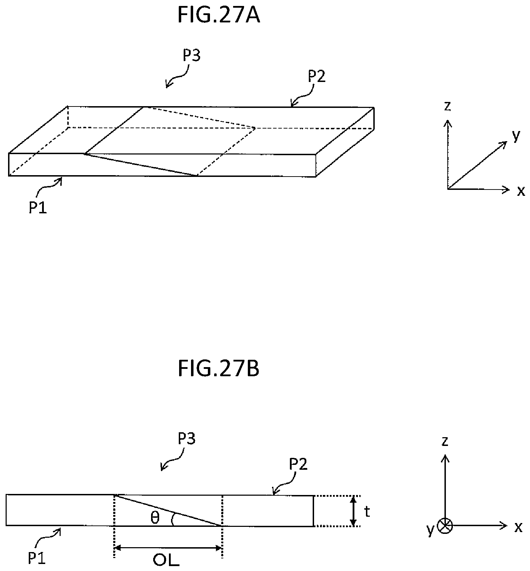

A molding material was obtained in the same manner as in Production Example 1, except that the plate thickness was adjusted to t. The molding material was cut on a surface (see Fig. 27A) having an angle of $\theta$ with respect to the in-plane direction of the molding material (X-axis direction in Figs. 27A and 27B) to create members P1 and P2. The members P1 and P2 have the same shape. As shown in Figs. 27A and 27B, the cut cross sections of the members P1 and P2 were overlapped.

The members P1 and P2 were dried with a hot air dryer at 120°C for 4 hours, then heated to 275°C with an infrared heater, charged into a mold set at 140°C and cold pressed at a pressing pressure of 10 MPa for 1 minute (same conditions as in Example 1) for joining, to obtain a test piece P3 for tensile test. By changing the plate thickness t and $\theta$ of the test piece P3, the test piece P3 for tensile test of each Reference Example was prepared. The length when the overlapped and joined portion is projected onto a plane parallel to the in-plane direction (X-axis direction in Figs. 27A and 27B) of the molding material is referred to as OL (OL portion in Fig. 27B).

The obtained test piece P3 for tensile test was subjected to a tensile test by the following method. The results are shown in Table 3 below. Table 3 also shows t and OL = t/tanθ.

[Table 3]

|  | t (mm) | OL (mm) | OL/t | Tensile strength (MPa) |
|---|---|---|---|---|
| Reference Example 1 | 1.6 | 15 | 9.3 | 334 |
| Reference Example 2 | 3.2 | 45 | 14 | 349 |
| Reference Example 3 | 2.5 | 15 | 6 | 235 |

(continued)

|  | t (mm) | OL (mm) | OL/t | Tensile strength (MPa) |
|---|---|---|---|---|
| Reference Example 4 | 3.2 | 15 | 4.7 | 142 |

It is considered that OL corresponds to the length (overlapped margin) of the overlapped portion of the wound molding material in the winding direction when the molding material is wound around the core mold and press-molded in the present invention. From the results in Table 3, it can be seen that the tensile strength is particularly high when the OL is 5 times or more of t.

[Reference Example 5]

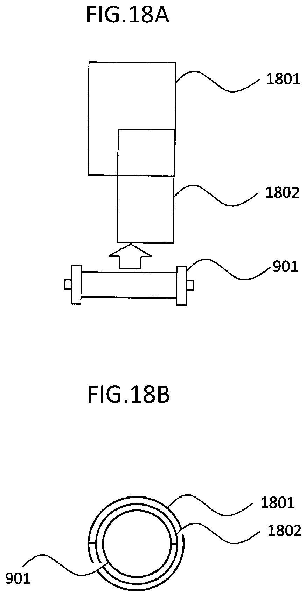

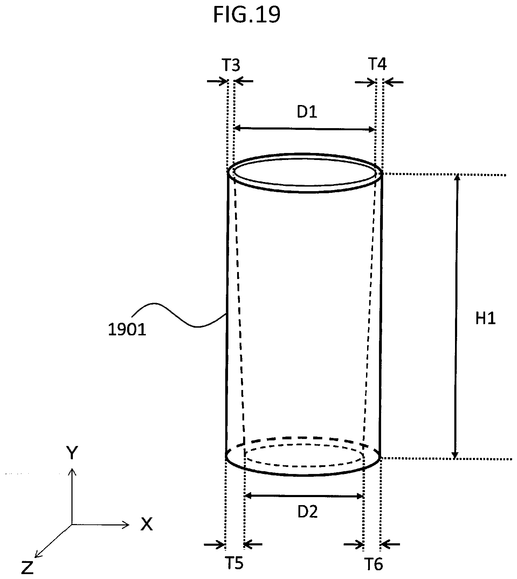

The molding material (i) obtained in Production Example 1 was cut into a size of 142 mm × 132 mm × thickness 1.6 mm to prepare a plate-shaped molding material A (1801 in Figs. 18A and 18B). In addition, the molding material (i) obtained in Production Example 1 was cut into a size of 142 mm × 90 mm × thickness 1.6 mm to prepare a plate-shaped molding material B (1802 in Figs. 18A and 18B).
One piece of the molding material A and one piece of the molding material B were used, and these molding materials were dried in a hot air dryer at 120°C for 4 hours, and then heated to 275°C with an infrared heater.
As the mold, the mandrel (core mold) 901 shown in Fig. 9A and the molding upper mold 902 the molding lower mold 903 shown in Fig. 9B were prepared.
The molds (molding upper mold, the molding lower mold, and the core mold) were set to 140°C, and the heated molding materials A and B were arranged as shown in Fig. 18A. As shown in the sectional view in Fig. 18B, each of the molding materials was wound around the mandrel for one turn, and the molding material was subjected to preliminary shaping and pressed at a pressing pressure of 10 MPa for 1 minute, to obtain a cylindrical impact absorbing member (1901 in Fig. 19). Since immediately before the molding pressure was applied, the molding material A was subjected to preliminary shaping substantially along the mandrel, so that the molding material hardly flowed due to the molding pressure. The molding material B flowed in the axial direction of the mandrel.
The obtained molded product (impact absorbing member) had a cylindrical shape as shown in Fig. 19. The thickness T3 and the thickness T4 of the one end portion (impact input side) of the outer tubular portion were 1.5 mm, the thickness T5 and the thickness T6 of the other end portion of the outer tubular portion were 3.0 mm, the inner diameter D1 of the one end portion (impact input side) of the outer tubular portion was 42 mm, the inner diameter D2 of the other end portion of the outer tubular portion was 39 mm, and the height H1 was 130 mm.
When the impact absorbing member (Fig. 19) created in Reference Example 5 was subjected to an impact energy of 2500 J in the coaxial direction (the Y-axis direction in Fig. 19) with the penetrating direction of the hollow structure of the impact absorbing member using a dropping impact test IM10 manufactured by IMATEK, the EA performance (Absorbed Energy per unit weight) was 58 [J/g].

[Reference Example 6]

When the impact absorbing test same as that in Reference Example 5 was performed while changing the carbon fibers used in Reference Example 5 to carbon fibers "Tenax" (registered trademark) UTS50-24K (average fiber diameter: 7 μm) manufactured by TEIJIN LIMITED, the EA performance was 83 [J/g].
The impact absorbing member in Comparative Reference Examples 5 and 6 had an annulus region in which carbon fibers were dispersed in the in-plane direction over the entire circumference of the outer tubular portion.

INDUSTRIAL APPLICABILITY

The impact absorbing member and the production method therefore according to the present invention can be used for various constituent members, for example, structural members of automobiles, various electric products, frames and housings of machines, and all other parts where structural member absorption is desired. Preferably, the impact absorbing member can be used as an automobile part.

REFERENCE SIGNS LIST

201, 301, 401 one end portion (impact input side end portion, top portion) of outer tubular portion

202, 302, 402 the other end portion (bottom portion) of outer tubular portion
203, 303, 403 hollow portion
204, 304, 404 outer tubular portion
205 central portion
305, 405 mounting portion
H, 306, H1 height of impact absorbing member
307 outer diameter of one end portion (diameter of top surface) of outer tubular portion
D1 inner diameter of one end portion of outer tubular portion
308 outer diameter of mounting portion
309, D2 inner diameter of the other end portion of outer tubular portion
T1, T3, T4 thickness of one end portion (thickness impact input side end portion) of outer tubular portion
T2, T5, T6 thickness of the other end portion (thickness of outer tubular portion on side opposite to impact input side)
501 molding lower mold
502 molding material wound around molding lower mold after heating
601 molding material laminated and arranged in molding lower mold
801, 1901 impact absorbing member (molded product)
901 mandrel (core mold)
902 upper mold
903 lower mold
1001, 1801, 1802 molding material
1002 molding material wound around mandrel after heating
1101 molding material for producing impact absorbing member including mounting portion
1201 annulus region
1301 flange portion
1501 line along which impact absorbing member is cut in order to check in-plane orientation
1701 rib
1702 protrusion
2301 molding material springing back too much
2401 molding material
2801 impact absorbing direction
S1 area of region facing core mold
S2 molding area of core mold
M overlapped portion of molding material
2501 outer line
E1 smallest circle among circles including entire shape of outer line
E2 largest circle present inside shape of outer line without protruding from outer line
$R_A$ diameter of circle E1
$R_B$ diameter of circle E2
P1, P2 member obtained by cutting molding material
P3 test piece for tensile test
t plate thickness of test piece P3 for tensile test
OL length when overlapped and joined portions are projected onto a plane parallel to in-plane direction of the molding material

## Claims

1. A method for producing an impact absorbing member, comprising:

    preheating a plate-shaped molding material containing carbon fibers having a weight average fiber length of 1 mm or more and 100 mm or less and a thermoplastic resin; and
    cold press molding the preheated molding material, wherein
    a magnitude of spring back is more than 1.0 and less than 14.0, the magnitude of spring back being a ratio of a thickness of the molding material after the preheating to a thickness of the molding material before the preheating of the molding material,
    the impact absorbing member comprises an impact absorbing portion having a hollow structure formed of an outer tubular portion and a hollow portion, and
    the impact absorbing member satisfies 0.7 < E1/E2 < 1.3, wherein

E1 represents a tensile elastic modulus in a direction perpendicular to an impact absorbing direction at one end portion of the outer tubular portion, and

E2 represents a tensile elastic modulus in the direction perpendicular to the impact absorbing direction at a central portion of the outer tubular portion; and

the outer tubular portion has an annulus region in which the carbon fibers are dispersed in an in-plane direction over the entire circumference of the outer tubular portion.

2. The method for producing an impact absorbing member according to claim 1, wherein the thickness of the outer tubular portion is uneven that the thickness increases from the one end portion to the other end portion of the outer tubular portion.

3. The method for producing an impact absorbing member according to claim 1 or 2, wherein a relationship between a thickness T1 at the one end portion of the outer tubular portion and a thickness T2 at the other end portion of the outer tubular portion satisfies $1.0 < T2/T1 < 3.0$.

4. The method for producing an impact absorbing member according to any one of claims 1 to 3, wherein

a mounting portion is provided on one of end portions of the outer tubular portion by integral molding,
the mounting portion contains carbon fibers having a weight average fiber length of 1 mm or more and 100 mm or less and a thermoplastic resin, and
the carbon fibers are present across the outer tubular portion toward the mounting portion.

5. The method for producing an impact absorbing member according to any one of claims 1 to 4,
wherein the carbon fibers are dispersed in the in-plane direction over the entire region of the outer tubular portion.

6. The method for producing an impact absorbing member according to any one of claims 1 to 5, satisfying $1 < R_A/R_B < 2$, wherein

$R_A$ represents a diameter of a smallest circle among circles surrounding the entire shape of an outer line of a cross section of the outer tubular portion cut in the direction perpendicular to the impact absorbing direction, and
$R_B$ represents a diameter of a largest circle among circles present inside the shape of the outer line without protruding from the outer line.

7. The method for producing an impact absorbing member according to claim 6, wherein

a shape of the cross section of the outer tubular portion cut in the direction perpendicular to the impact absorbing direction is a polygon, and
all apex angles of the polygon are 90 degrees or more.

8. The method for producing an impact absorbing member according to any one of claims 1 to 7, comprising:

winding the molding material softened by heating around a molding surface of a mold for one or more turns, an outer shape of the molding surface being a cylindrical shape, an elliptical cylindrical shape, a polygonal cylindrical shape, a truncated conical shape, an elliptical pyramid shape, or a polygonal pyramid shape; and
press-molding the molding material.

9. The method for producing an impact absorbing member according to claim 8,

wherein the mold is a core mold, and
the method comprises:

arranging the core mold around which the molding material is wound one or more turns between a molding upper mold and a molding lower mold; and
performing the cold press molding.

10. The method for producing an impact absorbing member according to claim 9,
wherein the cold pressing is performed with maintaining a temperature of the core mold higher than a temperature of the molding upper mold or the molding lower mold, and, less than a temperature being 20°C lower than a melting point of the thermoplastic resin when the thermoplastic resin is a crystalline resin, or less than a temperature being 20°C lower than a glass transition temperature of the thermoplastic resin when the thermoplastic resin is an amorphous resin.

11. The method for producing an impact absorbing member according to claim 9 or 10, further comprising:
preliminary shaping the molding material with providing a space between the molding material and the core mold when winding the molding material around the core mold.

12. The method for producing an impact absorbing member according to claim 11,
wherein a relationship between an area S1 of a region of the preliminarily shaped molding material facing the core mold and a molding area S2 of the core mold satisfies 1.05 < S1/S2 < 1.3.

13. The method for producing an impact absorbing member according to any one of claims 9 to 12,
wherein a minimum length of an overlapped portion of the wound molding material in a winding direction is equal to or more than 5 times a thickness of the molding material.

## FIG.1A

## FIG.1B

## FIG.1C

Y

X

Z

## FIG.1D

Y

X

Z

## FIG.2A

## FIG.2B

# FIG.3A

# FIG.3B

## FIG.4A

401

403

404

Y

X

Z

402

## FIG.4B

405

Y

X

Z

FIG.5A

501

FIG.5B

501

FIG.5C

502

501

FIG.5D

501

502

FIG.5E

FIG.6A

601

501

FIG.6B

## FIG.7

501

FIG.8A

801

501

FIG.8B

801

FIG.9A

901

FIG.9B

902

901

903

FIG.9C

902

901

903

FIG.10A

1001

901

FIG.10B

901

1002

FIG.10C

FIG.11A

1101

901

FIG.11B

1101

## FIG.12A

1201

## FIG.12B

1201

FIG.13A

1301

FIG.13B

FIG.13C

FIG.13D

FIG.14A

FIG.14B

FIG.15

1501

FIG.16

## FIG.17A

1701

## FIG.17B

1702

# FIG.18A

1801

1802

901

# FIG.18B

1801
1802

901

FIG.19

FIG.20

FIG.21

FIG.22

FIG.23

901

2301

903

## FIG.24

901

2401

S2

S1

## FIG.25

901

2401

M

FIG.26A

E1

$R_A$

2501

FIG.26B

E2

$R_B$

2501

FIG.27A

P3

P2

P1

z

y

x

FIG.27B

P3

P2

P1

θ

OL

t

z

y

x

FIG.28

2 8 0 1

<table>
<tr><td colspan="2" align="center">**INTERNATIONAL SEARCH REPORT**</td><td colspan="2">International application No.<br>PCT/JP2018/047112</td></tr>
</table>

**A. CLASSIFICATION OF SUBJECT MATTER**
Int.Cl. F16F7/12(2006.01)i, B29C70/42(2006.01)i, F16F7/00(2006.01)i

According to International Patent Classification (IPC) or to both national classification and IPC

**B. FIELDS SEARCHED**

Minimum documentation searched (classification system followed by classification symbols)
Int.Cl. F16F7/12, B29C70/42, F16F7/00

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2015-148282 A (TEIJIN LTD.) 20 August 2015, paragraphs [0016]-[0055]<br>& US 2016/0356334 A1, paragraphs [0086]-[0125] | 1-13 |
| Y | JP 10-55147 A (HOAN KOGYO KK) 24 February 1998, paragraph [0017]<br>(Family: none) | 1-13 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19.02.2019 | 05.03.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012087849 A
- JP 2013000933 A
- JP 2006205419 A
- US 8946342 B
- JP 2013049208 A